# EUROPEAN PATENT APPLICATION

(11) **EP 4 836 325 A1**
(43) Date of publication of application: **04.11.2026**
(21) Application number: 23962538.7
(22) Date of filing: 25.12.2023
(51) Int. Cl.: H04B 17/11, H04W 72/04

(54) **COMMUNICATION METHODS, COMMUNICATION APPARATUS, COMMUNICATION DEVICE, STORAGE MEDIUM AND COMMUNICATION SYSTEM**

(71) Applicant: Beijing Xiaomi Mobile Software Co., Ltd., Beijing 100085 (CN)
(72) Inventor: DUAN, Gaoming, Beijing 100085 (CN)
(74) Representative: Gunzelmann, Rainer
(86) International application number: PCT/CN2023/141707
(87) International publication number: WO 2025/137840

(57) **Abstract**

Provided in the present disclosure are communication methods, a communication apparatus, a communication device, a storage medium and a communication system. A method is executed by a network device, and the method comprises: receiving one or more pieces of first information sent by a terminal, wherein the first information is used for indicating the magnitude of an array gain loss of a first beam, which is sent by the network device to the terminal.

## Description

### FIELD

The present disclosure relates to the field of communication technologies, and more particularly to a communication method, a communication apparatus, a communication device, a storage medium and a communication system.

### BACKGROUND

In a high-frequency communication system, due to a large system bandwidth and a large wavelength difference between different subcarriers, a beam will deviate from a line of sight and spread to other directions under the action of the same analog beamforming vector, causing a beam squint phenomenon.

### SUMMARY

The present disclosure provides a communication method, a communication apparatus, a communication device, a storage medium and a communication system. The method of the present disclosure may be used to solve the technical problem that "when a network device sends a beam to a terminal, the network device cannot obtain a beam squint degree of the terminal".

According to a first aspect of embodiments of the present disclosure, a communication method is provided, which is performed by a network device. The method includes: receiving one or more instances of first information sent from a terminal, where the one or more instances of first information indicate an array gain loss of a first beam sent from the network device to the terminal.

In the above method, the network device receives the one or more instances of first information sent from the terminal, the network device obtains the array gain loss of the first beam, and then the network device may obtain the beam squint degree of the terminal.

According to a second aspect of embodiments of the present disclosure, a communication method is provided, which is performed by a terminal. The method includes: sending one or more instances of first information to a network device, where the one or more instances of first information indicate an array gain loss of a first beam sent from the network device to the terminal.

In the above method, the one or more instances of first information are sent to the network device to report the array gain loss of the first beam to the network device, and then the network device may obtain the beam squint degree of the terminal.

According to a third aspect of embodiments of the present disclosure, a network device is provided, which includes a transceiver module configured to receive one or more instances of first information sent from a terminal, where the one or more instances of first information indicate an array gain loss of a first beam sent from the network device to the terminal.

According to a fourth aspect of embodiments of the present disclosure, a terminal is provided, which includes a transceiver module configured to send one or more instances of first information to a network device, where the one or more instances of first information indicate an array gain loss of a first beam sent from the network device to the terminal.

According to a fifth aspect of embodiments of the present disclosure, a communication device is provided, which includes: a transceiver; a memory; and a processor connected to the transceiver and the memory respectively, and configured to control wireless signal reception and transmission of the transceiver by executing computer executable instructions on the memory, and perform the method according to any one of the first aspect and the second aspect.

According to a sixth aspect of embodiments of the present disclosure, a communication system is provided, which includes a terminal and a network device. The terminal is configured to perform the method according to the first aspect, and the network device is configured to perform the method according to the second aspect.

According to a seventh aspect of embodiments of the present disclosure, a computer storage medium is provided. The computer storage medium stores computer executable instructions. After the computer executable instructions are executed by a processor, the method according to any one of the first aspect and the second aspect may be performed.

### BRIEF DESCRIPTION OF THE DRAWINGS

The above and/or additional aspects and advantages of the present disclosure become apparent and easily understood from the following description of the embodiments with reference to the accompanying drawings.
FIG. 1 is a schematic diagram of an architecture of a communication system provided by an embodiment of the present disclosure.
FIG. 2 is a schematic interaction diagram of some communication methods provided by embodiments of the present disclosure.
FIG. 3a-3d are schematic flowcharts of some communication methods provided by embodiments of the present disclosure.
FIG. 4a-4d are schematic flowcharts of some other communication methods provided by embodiments of the present disclosure.
FIG. 5 is a schematic interaction diagram of a communication method provided by an embodiment of the present disclosure.
FIG. 6a is a block diagram of a terminal provided by an embodiment of the present disclosure.
FIG. 6b is a block diagram of a network device provided by an embodiment of the present disclosure.
FIG. 7a is a block diagram of a communication device provided by an embodiment of the present disclosure.
FIG. 7b is a block diagram of a chip provided in an embodiment of the present disclosure.

### DETAILED DESCRIPTION

Methods in the present disclosure may be used to solve the technical problem that "when a network device sends a beam to a terminal, the network device cannot obtain a beam squint degree of the terminal".

In a first aspect, embodiments of the present disclosure provide a communication method, which is performed by a network device, and includes: receiving one or more instances of first information sent from a terminal, where the one or more instances of first information indicate an array gain loss of a first beam sent from the network device to the terminal.

In the above method, the network device receives the one or more instances of first information sent from the terminal, the network device obtains the array gain loss of the first beam, and then the network device may obtain the beam squint degree of the terminal.

In combination with some embodiments of the first aspect, in some embodiments, the method further includes: sending second information to the terminal, where the second information is configured to indicate the terminal whether to send the one or more instances of first information.

In the above embodiments, by sending the second information to the terminal, the terminal is indicated to send the one or more instances of first information to the network device when array gain compensation is required, which avoids resource waste caused by sending the one or more instances of first information to the network device when array gain compensation is not required for the terminal.

In combination with some embodiments of the first aspect, in some embodiments, the method further includes: receiving indication information sent from the terminal, where the indication information is configured to indicate the network device whether to compensate for the array gain loss caused by beam squint.

In the above embodiments, the network device determines whether to compensate for the array gain loss by receiving the indication information sent from the terminal.

In combination with some embodiments of the first aspect, in some embodiments, the method further includes: sending third information to the terminal, where the third information indicates a first threshold and the first threshold is configured to assist the terminal in sending the indication information to the network device.

In the above embodiments, the third information is sent to the terminal, and the terminal may determine whether to compensate for the array gain loss, which avoids the waste of communication resources and expands the application scope of the technical solution in the present disclosure.

In combination with some embodiments of the first aspect, in some embodiments, the method further includes: sending a first reference signal to the terminal, where the first reference signal is configured for the terminal to determine the one or more instances of first information.

In the above embodiments, the first reference signal is sent to the terminal, and the terminal may determine the one or more instances of first information based on the first reference signal, which lays a foundation for the terminal to report the beam squint degree of the terminal to the network device.

In combination with some embodiments of the first aspect, in some embodiments, the method further includes: sending fourth information to the terminal, where the fourth information is configured to indicate the terminal to send one instance of first information or a plurality of instances of first information.

In the above embodiments, the fourth information is sent to the terminal to indicate the terminal to send different quantities of instances of first information in different situations, which avoids the waste of communication resources and expands the application scope of the technical solution in the present disclosure.

In combination with some embodiments of the first aspect, in some embodiments, the fourth information includes: at least two reference signal resource unit indexes of the first reference signal.

In combination with some embodiments of the first aspect, in some embodiments, the method further includes: sending fifth information to the terminal, where the fifth information indicates a method by which the terminal determines the one or more instances of first information.

In the above embodiments, the fifth information is sent to the terminal to indicate the method by which the terminal determines the one or more instances of first information. As such, the terminal may determine the beam squint degree of the terminal.

In combination with some embodiments of the first aspect, in some embodiments, the method further includes: determining a first coefficient based on the one or more instances of first information, where the first coefficient is configured to compensate for the array gain loss of the first beam.

In the above embodiments, the first coefficient is determined based on the one or more instances of first information, and then a compensation coefficient of the beam squint of the terminal is determined. As such, the network device may compensate for the beam squint of the terminal using the first coefficient.

In combination with some embodiments of the first aspect, in some embodiments, the method further includes: based on the first coefficient, compensating for the array gain loss of the first beam caused by beam squint, and adjusting the first beam to a target beam direction.

In the above embodiments, based on the first coefficient, the array gain loss of the first beam caused by the beam squint is compensated, and the beam direction is adjusted to the target direction, which achieves the compensation of the beam squint of the terminal by the network device.

In combination with some embodiments of the first aspect, in some embodiments, the target beam direction includes any one of: a direction corresponding to an actual location of the terminal; and a direction corresponding to a center carrier frequency configured by the network device for the first beam.

In the above embodiments, by setting different target beam directions, the network device may compensate the first beam to different target beam directions according to different application scenarios, which expands the application scope of the technical solution in the present disclosure.

In a second aspect, embodiments of the present disclosure provide a communication method, which is performed by a terminal, and includes: sending one or more instances of first information to a network device, where the one or more instances of first information indicate an array gain loss of a first beam sent from the network device to the terminal.

In the above method, the one or more instances of first information are sent to the network device to report the array gain loss of the first beam to the network device, and the network device may obtain the beam squint degree of the terminal.

In combination with some embodiments of the second aspect, in some embodiments, the method further includes: receiving second information sent from the network device, where the second information is configured to indicate the terminal whether to send the one or more instances of first information.

In the above method, by receiving the second information sent from the network device, the terminal may send the one or more instances of first information to the network device when array gain compensation is required, which avoids resource waste caused by sending the one or more instances of first information to the network device when array gain compensation is not required for the terminal.

In combination with some embodiments of the second aspect, in some embodiments, the method also includes: receiving third information sent from the network device, where the third information includes a first threshold, the first threshold is configured to assist the terminal in sending indication information to the network device, and the indication information is configured to indicate the network device whether to compensate for the array gain loss.

In the above embodiments, by receiving the third information sent from the network device, the terminal may judge whether to compensate for the array gain loss, which avoids the waste of communication resources and expanding the application scope of the technical solution in the present disclosure.

In combination with some embodiments of the second aspect, in some embodiments, the method further includes: receiving a first reference signal sent from the network device, where the first reference signal is configured for the terminal to determine the one or more instances of first information.

In the above embodiments, by receiving the first reference signal sent from the network device, the terminal may determine the one or more instances of first information based on the first reference signal, which lays a foundation for the terminal to report the beam squint degree of the terminal to the network device.

In combination with some embodiments of the second aspect, in some embodiments, the method further includes: receiving fourth information sent from the network device, where the fourth information is configured to indicate the terminal to send one instance of first information or a plurality of instances of first information.

In the above embodiments, the fourth information sent from the network device is received, and the terminal may send different quantities of instances of first information in different situations, which avoids the waste of communication resources and expanding the application scope of the technical solution in the present disclosure.

In combination with some embodiments of the first aspect, in some embodiments, the fourth information includes: at least two reference signal resource unit indexes of the first reference signal.

In combination with some embodiments of the second aspect, in some embodiments, the method further includes: receiving fifth information sent from the network device, where the fifth information indicates a method by which the terminal determines the one or more instances of first information.

In the above embodiments, by receiving the fifth information sent from the network device, the terminal obtains the method for determining the one or more instances of first information, and the terminal may determine the beam squint degree of the terminal.

In combination with some embodiments of the first aspect, in some embodiments, the method further includes: determining the one or more instances of first information.

In combination with some embodiments of the first aspect, in some embodiments, determining the one or more instances of first information includes: determining energy per resource elements (EPREs) of two reference signal resource units of the first reference signal, where the two reference signal resource units of the first reference signal are indicated by a base station or a protocol agreement; and determining the one or more instances of first information based on a ratio between the EPREs of the two reference signal resource units of the first reference signal.

In the above embodiments, the one or more instances of first information are determined by determining the ratio between the EPREs of the two reference signal resource units of the first reference signal, which realizes a first information determination scheme, and lays a foundation for the network device to obtain the beam squint degree of the terminal.

In combination with some embodiments of the first aspect, in some embodiments, the method further includes: determining the ratio between the EPREs of the two reference signal resource units based on the fifth information or a protocol agreement.

In the above embodiments, the terminal may determine the ratio between the EPREs of the two reference signal resource units in two different ways, which expands the application scope of the technical solution in the present disclosure.

In combination with some embodiments of the first aspect, in some embodiments, the method further includes: sending the indication information to the network device based on the first threshold and the ratio between the EPREs of the two reference signal resource units.

In the above embodiments, with the first threshold and the ratio between the EPREs of the two reference signal resource units, it is determined whether the terminal needs to indicate the network device to compensate for the array gain loss, which avoids the waste of communication resources. Moreover, when array gain loss compensation is required, the indication information is sent to the network device to indicate the network device to compensate for the array gain loss.

In combination with some embodiments of the first aspect, in some embodiments, the method further includes: based on a protocol agreement, determining, by the terminal, whether to send the one or more instances of first information to the network device.

In the above embodiments, the terminal may determine whether to send the one or more instances of first information to the network device based on the protocol agreement, and the terminal may also determine whether to send the one or more instances of first information without receiving the second information, which expands the application scope of the technical solution in the present disclosure.

In combination with some embodiments of the first aspect, in some embodiments, the method further includes: based on a protocol agreement, determining, by the terminal, a method for determining the one or more instances of first information.

In the above embodiments, based on the protocol agreement, the terminal may determine the method for determining the one or more instances of first information, and the terminal may also obtain the method for determining the one or more instances of first information without receiving the fifth information, which expands the application scope of the technical solution in the present disclosure.

In combination with some embodiments of the first aspect, in some embodiments, the method further includes: determining, by the terminal, the first threshold based on a protocol agreement.

In the above embodiments, the terminal may determine the first threshold based on the protocol agreement, and the terminal may also obtain the first threshold without receiving the third information, which expands the application scope of the technical solution in the present disclosure.

In a third aspect, embodiments of the present disclosure provide a network device, which includes a transceiver module configured to receive one or more instances of first information sent from a terminal, where the one or more instances of first information indicate an array gain loss of a first beam sent from the network device to the terminal.

In a fourth aspect, embodiments of the present disclosure provide a terminal, which includes a transceiver module configured to send one or more instances of first information to a network device, where the one or more instances of first information indicate an array gain loss of a first beam sent from the network device to the terminal.

In a fifth aspect, embodiments of the present disclosure provide a communication device, which includes: one or more processors; and one or more memories for storing instructions. The processor is configured to call the instructions to cause the communication device to perform the method described in the optional implementations of the first aspect or the second aspect.

In a sixth aspect, embodiments of the present disclosure provide a communication system, which includes a terminal and a network device. The terminal is configured to perform the method according to the first aspect, and the network device is configured to perform the method according to the second aspect.

In a seventh aspect, embodiments of the present disclosure provide a computer program, which, when executed on a computer, causes the computer to perform the method described in the optional implementations of the first aspect or the second aspect.

It may be understood that the above terminal, network device, communication device, communication system, storage medium, and computer program are all configured to perform the methods provided in the embodiments of the present disclosure. Therefore, for the beneficial effects that they may achieve, reference may be made to the beneficial effects in the corresponding methods, which will not be repeated here.

The embodiments of the present disclosure provide the communication method, communication apparatus, communication device, storage medium and communication system. In some embodiments, the terms communication method, information processing method, communication method, etc. may be replaced with each other, and the terms information processing system, communication system, etc. may be replaced with each other.

The embodiments of the present disclosure are not exhaustive, but are merely illustrative of some embodiments, and are not intended to impose a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged, and in addition, the steps may be arbitrarily combined in the embodiment; moreover, the embodiments may be arbitrarily combined, for example, some or all steps of different embodiments may be arbitrarily combined, and a certain embodiment may be arbitrarily combined with other embodiments.

In the embodiments of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, the element expressed in the singular form, such as "a", "an", "the", "above", "said", "aforementioned", "this", etc., may mean "one and only one", "one or more", or "at least one", etc. For example, when using articles such as "a", "an", "the" in English in translation, the noun after the article may be understood as a singular expression or a plural expression.

In the embodiments of the present disclosure, "a plurality of" refers to two or more.

In some embodiments, the terms "at least one of", "one or more", "a plurality of", and "multiple", etc. may be used interchangeably.

In the embodiments of the present disclosure, descriptions such as "at least one of A, B, C...", "A and/or B and/or C...", etc. include the situations where any one of A, B, C... exists alone, and also include the situations where any multiple of A, B, C... exist in any combination, and each situation may exist alone. For example, "at least one of A, B, C" includes the situations where A alone, B alone, C alone, the combination of A and B, the combination of A and C, the combination of B and C, and the combination of A, B and C. For example, A and/or B includes the situation where A alone, B alone, and the combination of A and B.

In some embodiments, the descriptions such as "in a case, A, and in another case, B", "in response to a case, A, and in response to another case, B", etc. may include the following technical solutions according to the situations: A is executed independently of B, that is, in some embodiments, A; B is executed independently of A, that is, in some embodiments, B; A and B are selectively executed, that is, one is selected from A and B to be executed in some embodiments; A and B are both executed, that is, A and B in some embodiments. When there are more branches such as A, B, C, etc., it is similar to the above.

The prefixes such as "first" and "second" in the embodiments of the present disclosure are only used to distinguish different descriptive objects, and do not constitute limitations on the positions, orders, priorities, quantities or content of the descriptive objects. For the statement of the descriptive objects, reference may be made to the description in the context of the claims or embodiments, and it should not constitute redundant limitations due to the use of prefixes. For example, if the descriptive object is "field", the ordinal numbers before "field" in "first field" and "second field" do not limit the positions or orders of the "fields", and the terms "first" and "second" do not limit whether the "fields" they modify are in the same message, nor do they limit the sequence of the "first field" and the "second field". For another example, if the descriptive object is "level", the ordinal numbers before "level" in "first level" and "second level" do not limit the priorities of the "levels". For another example, the number of the descriptive objects is not limited by the ordinal number, and may be one or more. Taking "first apparatus" as an example, the number of the "apparatus" may be one or more. In addition, the objects modified by different prefixes may be the same or different. For example, if the descriptive object is "apparatus", "first apparatus" and "second apparatus" may be the same apparatus or different apparatuses, and their types may be the same or different. For another example, if the descriptive object is "information", "first information" and "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "provided/providing that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatuses, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the structure where communication between the access network device, the core network device or the network device and the terminal is replaced with communication between multiple terminals (e.g., device-to-device (D2D), vehicle-to-everything (V2X), etc.) may also be applied to various embodiments of the present disclosure. In this case, the terminal may also be configured to have all or part of the functions of the access network device. In addition, the terms such as "uplink" and "downlink" may be replaced with the terms (e.g., "sidelink") corresponding to the communication between the terminals. For example, uplink channels or downlink channels may be replaced with sidelink channels, and uplink links or downlink links may be replaced with sidelinks.

In some embodiments, the terminal may be replaced with the access network device, the core network device, or the network device. In this case, the access network device, the core network device, or the network device may also be configured to have all or part of the functions of the terminal.

In some embodiments, "network" may be interpreted as devices included in the network (e.g., access network device, core network device, etc.).

In some embodiments, obtaining data, information, etc. shall comply with laws and regulations of a country where it is located.

In some embodiments, data, information, etc. may be obtained after agreed by a user.

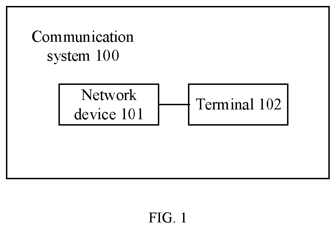

FIG. 1 is a schematic diagram of an architecture of a communication system according to an embodiment of the present disclosure. As shown in FIG. 1, the communication system may include at least one of a network device 101 and a terminal 102.

In some embodiments, the network device 101 is, for example, a node or device that accesses a terminal to a wireless network. The network device may include at least one of an evolved NodeB (eNB) in a 5G communication system, a next generation evolved NodeB (ng-eNB), a next generation NodeB (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a wireless fidelity (WiFi) system, but is not limited thereto.

In some embodiments, the terminal 102 is, for example, at least one of a mobile phone, a wearable device, an Internet of Things device, a vehicle with a communication function, a smart vehicle, a tablet computer (Pad), a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, and a wireless terminal in a smart home, but is not limited thereto.

It may be understood that the communication system described in the embodiments of the present disclosure is for the purpose of more clearly illustrating the technical solution of the embodiments of the present disclosure, and does not constitute a limitation on the technical solution provided in the embodiments of the present disclosure. A person of ordinary skill in the art may know that with the evolution of the system architecture and the emergence of new business scenarios, the technical solution provided in the embodiments of the present disclosure is also applicable to similar technical problems.

The following embodiments of the present disclosure may be applied to the communication system 100 shown in FIG.1, or part of the entities in the communication system 100, but the present disclosure is not limited to this. The entities shown in FIG. 1 are examples, and the communication system may include all or part of the entities in FIG. 1, or may include other entities other than those in FIG. 1. The numbers and forms of the entities are arbitrary, and the connection relationship between the entities is an example. The entities may be connected or disconnected, and the connection may be in any manner, which may be a direct connection or an indirect connection, and may be a wired connection or a wireless connection.

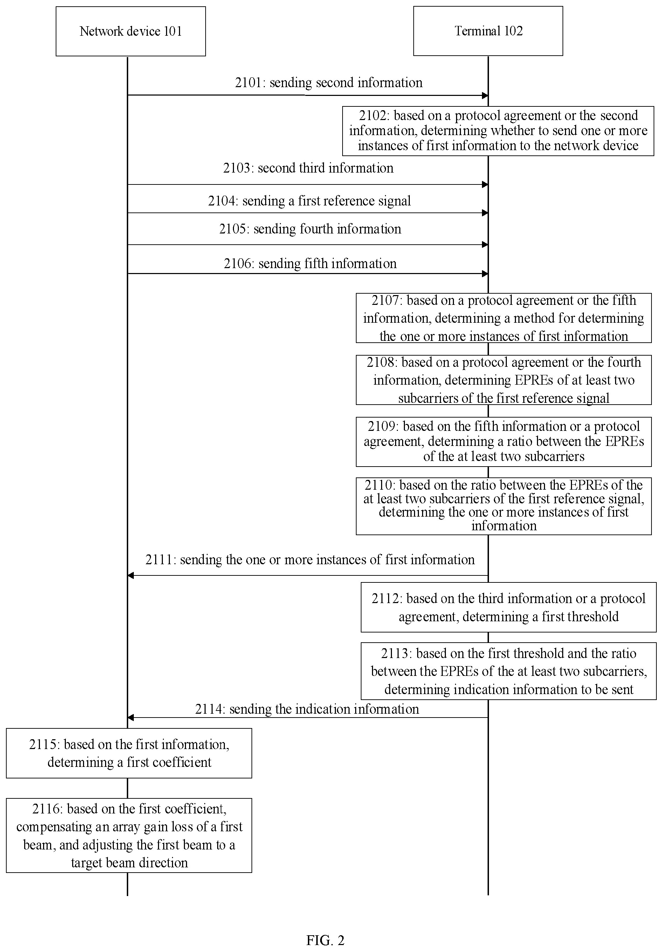

FIG. 2 is a schematic interaction diagram of a communication method according to an embodiment of the present disclosure. As shown in FIG. 2, the embodiment of the present disclosure relates to a communication method, which is used in the communication system 100, and includes the following steps.

In step 2101, the network device 101 sends second information to the terminal 102.

In some embodiments, the network device 101 sends the second information to the terminal 102 to indicate the terminal to determine whether to send one or more instances of first information.

In an optional embodiment, the beam squint degree of a first beam sent from the network device 101 to the terminal 102 is relatively small, and the network device 101 may send the second information to the terminal 102 to indicate the terminal 102 not to send the one or more instances of first information.

In an optional embodiment, the beam squint degree of the first beam sent from the network device 101 to the terminal 102 is relatively large, and the network device 101 may send the second information to the terminal 102 to indicate the terminal 102 to send the one or more instances of first information, so as to assist the network device 101 in adjusting a direction of the first beam, which reduces an array gain loss of the first beam.

In some embodiments, the second information is configured to indicate the terminal whether to send the one or more instances of first information.

In some embodiments, the name of the second information is not limited, and it may be, for example, "sending instruction information", "sending execution information", etc.

In some embodiments, step 2101 is optional, and the terminal 102 may obtain the second information through other devices, or the terminal 102 may determine whether to send the one or more instances of first information to the network device 101 based on a protocol agreement.

For example, in a case that the direction of the first beam sent from the network device 101 is the same as a direction toward an actual location of the terminal 102, the array gain loss of the first beam sent from the network device 101 to the terminal 102 is small, and the network device 101 may send the second information to the terminal 102 to indicate the terminal 102 not to send the one or more instances of first information, which avoids the waste of communication resources.

For example, the network device 101 may send the second information by sending channel state information reporting configuration (CSI reporting configuration) to the terminal 102, for example, by adding a 1-bit information field in the CSI reporting configuration to represent the second information, and when the information field is 1, the terminal 102 does not send the one or more instances of first information; and when the information field is 0, the terminal 102 sends the one or more instances of first information.

In step 2102, based on a protocol agreement or the second information, the terminal 102 determines whether to send one or more instances of first information to the network device 101.

In some embodiments, based on the protocol agreement or the second information, the terminal 102 determines to send the one or more instances of first information to the network device 101 to assist the network device 101 in adjusting the direction of the first beam, which reduces the array gain loss of the first beam.

In some embodiments, based on the protocol agreement or the second information, the terminal 102 determines not to send the one or more instances of first information to the network device 101, which avoids the waste of communication resources.

In some embodiments, the one or more instances of first information indicate the array gain loss of the first beam sent from the network device 101 to the terminal 102.

In some embodiments, one instance of first information may be a value of one beam squint level (BSL), where the value of the BSL may be normalized and the value of the BSL in an interval [0, 1] may be determined as the first information. The smaller the value of the BSL is, the larger the array gain loss of the first beam is. The larger the value of the BSL is, the smaller the array gain loss of the first beam is.

In some embodiments, the network device may determine the beam squint degree of the first beam sent to the terminal, that is, the network device may know the degree of deflection of a subcarrier in the first beam. However, since the terminals receiving the first beam may be located in different positions and directions, the array gain loss generated when the terminals in different positions and directions receive the first beam may be different, and the network device cannot determine the position and direction of each terminal. Therefore, when the network device needs to compensate for the array gain loss of the terminal and adjust the direction of the first beam, the network device may indicate the terminal to send the one or more instances of first information by sending the second information, or the terminal may send the one or more instances of first information to the network device based on the protocol agreement. As such, the network device may determine the position and direction of the terminal through the first information, and then compensate for the array gain loss of the terminal according to the position and direction of the terminal, and adjust a transmission direction of the first beam.

In some embodiments, the name of the first information is not limited, and may be, for example, "array gain loss information", "beam squint information", etc.

In some embodiments, step 2102 is optional and may be omitted, and the terminal 102 sends the one or more instances of first information to the network device 101 by default.

In step 2103, the network device 102 sends third information to the terminal 101.

In some embodiments, the network device 102 sends the third information to the terminal 101, and the terminal 101 may judge whether to compensate for the array gain loss, which avoids the waste of communication resources.

In some embodiments, the third information indicates a first threshold, and the first threshold may be a preset threshold for the first information. Taking an example that the first information is a BSL value, the first threshold may be a preset BSL value. When the BSL value in the first information is less than the preset BSL value in the first threshold, it indicates that the array gain loss of the first beam is large. At this time, the terminal 102 may send indication information to the network device 101 to indicate the network device 101 to compensate for the array gain loss.

In other words, the third information indicates the first threshold, and the first threshold is configured to assist the terminal in sending the indication information to the network device, where the indication information is configured to indicate the network device whether to compensate for the array gain loss.

In some embodiments, the name of the third information is not limited, and it may be, for example, "threshold indication information", "compensation determination information", etc.

In some embodiments, step 2103 is optional, and the terminal 102 may obtain the third information through other devices, or determine the first threshold indicated in the third information through a protocol agreement.

In step 2104, the network device 101 sends a first reference signal to the terminal 102.

In some embodiments, the network device 101 sends the first reference signal to the terminal 102, and the terminal 102 may determine the one or more instances of first information based on the first reference signal.

In some embodiments, the specific type of the first reference signal is not limited, and it is, for example, a channel state information reference signal (CSI-RS).

In some embodiments, step 2104 is optional, and the terminal 102 may obtain relevant parameters of the first reference signal in other ways.

In step 2105, the network device 101 sends fourth information to the terminal 102.

In some embodiments, the network device 101 sends the fourth information to the terminal 102 to indicate the terminal 102 to send different quantities of instances of first information in different situations, which avoids the waste of communication resources.

In some embodiments, when the network device 101 expects to obtain one instance of first information, or the network device 102 may compensate for the array gain loss of the first beam based on one instance of first information, the fourth information indicates the terminal 102 to send one instance of first information.

In some embodiments, when the network device 101 expects to obtain a plurality of instances of first information, or the network device 102 needs to compensate for the array gain loss of the first beam based on a plurality of instances of first information, the fourth information indicates the terminal 102 to send a plurality of instances of first information.

In some embodiments, the fourth information includes at least two reference signal resource unit indexes of the first reference signal, and the terminal 102 may determine one or more instances of fourth information based on reference signal resource units indicated by the at least two reference signal resource unit indexes.

In some embodiments, the number of the reference signal resource unit indexes of the first reference signal included in the fourth information is related to the number of instances of first information sent from the terminal 102 as indicated by the fourth information, and the terminal 102 may determine one instance of first information through two reference signal resource unit indexes of the first reference signal.

In other words, when the fourth information indicates the terminal 102 to send one instance of first information, the fourth information may include two reference signal resource unit indexes of the first reference signal. When the fourth information indicates the terminal 102 to send a plurality of instances of first information, the fourth information may include at least three reference signal resource unit indexes of the first reference signal.

In some embodiments, the name of the fourth information is not limited, and it may be, for example, "reference signal resource unit indication information", "reference signal resource unit index information", "resource unit index information", etc.

In some embodiments, step 2105 is optional, and the terminal 102 sends one instance of first information to the network device 101 by default, or the terminal 102 sends a plurality of instances of first information to the network device 101 by default.

In step 2106, the network device 101 sends fifth information to the terminal 102.

In some embodiments, the network device 101 sends the fifth information to the terminal 102 to indicate a method by which the terminal determines the first information.

In some embodiments, the fifth information indicates a method by which the terminal determines one or more instances of first information.

In some embodiments, there is no limitation on the method for determining the one or more instances of first information, which is, for example, determining a ratio of energy per resource elements (EPREs) of two reference signal resource units of the first reference signal as one instance of first information. For example, a normalized value of the ratio between the EPREs of the two reference signal resource units of the first reference signal is determined as one instance of first information. Optionally, the fifth information may also indicate the EPRE of the reference signal resource unit of the first reference signal as the numerator and the EPRE of the reference signal resource unit of the first reference signal as the denominator. For example, the fifth information indicates that one instance of first information is determined by the ratio between the EPRE of reference signal resource unit f₁ and the EPRE of reference signal resource unit f₂, and the fifth information may also indicate that the EPRE of the reference signal resource unit f₁ serves as the numerator of the ratio, and indicate that the EPRE of the reference signal resource unit f₂ serves as the denominator of the ratio.

In some embodiments, the fifth information may also indicate a ratio of two reference signal resource units of the first reference signal.

In some embodiments, the name of the fifth information is not limited, and it may be, for example, "determination manner information", "manner indication information", "BSL calculation manner information", etc.

In some embodiments, step 2106 is optional, and the terminal 102 may obtain the fifth information through other devices, or obtain the method for determining one or more instances of first information based on a protocol agreement.

In a step 2107, the terminal 102 determines a method for determining the one or more instances of first information based on a protocol agreement or the fifth information.

In some embodiments, the terminal 102 may determine the method for determining the one or more instances of first information based on the protocol agreement or the fifth information.

In some embodiments, the method for determining the first information may be determining a ratio between EPREs of two reference signal resource units of the first reference signal as one instance of first information.

In some embodiments, the method for determining the first information may be determining a normalized value of the ratio between the EPREs of the two reference signal resource units of the first reference signal as one instance of first information.

In some embodiments, the terminal 102 may also determine the numerator and denominator of the ratio between the EPREs of the reference signal resource units based on the protocol agreement or the fifth information. For example, the protocol agreement or the fifth information indicates that the EPRE of the reference signal resource unit f₁ serves as the numerator of the ratio, and indicates that the EPRE of the reference signal resource unit f₂ serves as the denominator of the ratio. For example, the protocol agreement or the fifth information value indicates that the EPRE of a high-frequency reference signal resource unit serves as the numerator of the ratio, and indicates that the EPRE of a low-frequency reference signal resource unit serves as the denominator of the ratio.

In some embodiments, step 2107 is optional, and the terminal 102 may default to the method for determining the first information.

In step 2108, the terminal 102 determines EPREs of at least two reference signal resource units of the first reference signal based on a protocol agreement or the fourth information.

In some embodiments, the terminal 102 may determine a reference signal resource unit index of the reference signal resource unit of the first reference signal based on the protocol agreement, and the terminal 102 may measure a corresponding reference signal resource unit based on the reference signal resource unit index to determine the EPRE of the reference signal resource unit.

In some embodiments, the terminal 102 may measure a corresponding reference signal resource unit based on a reference signal resource unit index in the fourth information, so as to determine the EPRE of the reference signal resource unit.

In some embodiments, step 2108 is optional, and the terminal 102 may directly obtain the EPREs of at least two reference signal resource units of the first reference signal.

In step 2109, the terminal 102 determines the ratio between the EPREs of at least two reference signal resource units based on a protocol agreement or the fifth information.

In some embodiments, based on the protocol agreement or fifth information, the terminal 102 may determine the EPRE of the reference signal resource unit of the first reference signal as the numerator and the EPRE of the reference signal resource unit of the first reference signal as the denominator, and then determine the ratio between the EPREs of the at least two reference signal resource units.

In some embodiments, step 2109 is optional, and the terminal 102 may obtain the ratio between the EPREs of the at least two reference signal resource units in other ways.

In step 2110, the terminal 102 determines the one or more instances of first information based on the ratio between the EPREs of the at least two reference signal resource units of the first reference signal.

In some embodiments, the terminal 102 determines a ratio between EPREs of two reference signal resource units as one instance of first information.

In some embodiments, the terminal 102 may normalize the ratio between the EPREs of the two reference signal resource units, and determine the normalized ratio as one instance of first information.

Optionally, the terminal 102 may normalize the ratio between the EPREs of the two reference signal resource units by the following formula:$η = \frac{1}{\left|log\left(β\right)\right| + 1}$ (formula 1)

In formula 1, *η* represents the first information (i.e., the normalized ratio between the EPREs of the two reference signal resource units), and β represents the ratio between the EPREs of the two reference signal resource units.

In some embodiments, the terminal 102 may determine multiple ratios between EPREs of at least three reference signal resource units as a plurality of instances of first information.

In some embodiments, the terminal 102 may normalize multiple ratios between the EPREs of the at least three reference signal resource units, and determine the normalized multiple ratios as a plurality of instances of first information.

In some embodiments, step 2110 is optional, and the terminal 102 may directly obtain one or more instances of first information.

In step 2111, the terminal 102 sends the one or more instances of first information to the network device 101.

In some embodiments, the terminal 102 sends the one or more instances of first information to the network device 101 to report the array gain loss of the first beam to the network device 102, and the network device may obtain the beam squint degree of the terminal.

Optionally, in some embodiments, the first information may also be used to assist the network device 101 in determining whether to compensate for the array gain loss of the terminal 102. In other words, the network device 101 may comprehensively consider the array gain loss of each terminal 102 based on the first information sent from one or more terminals 102, so as to determine whether to compensate for the array gain loss of each terminal 102.

In step 2112, the terminal 102 determines a first threshold based on the third information or a protocol agreement.

In some embodiments, the terminal may determine the first threshold based on the third information or the protocol agreement, so as to determine whether to indicate the network device 101 to compensate for the array gain loss.

In some embodiments, the first threshold is configured to assist the terminal in sending indication information to the network device, and the indication information is configured to indicate the network device whether to compensate for the array gain loss.

In some embodiments, the first threshold may be a threshold for a ratio between EPREs of at least two reference signal resource units, or a threshold for a normalized ratio between EPREs of at least two reference signal resource units, which is not limited in the present disclosure.

In some embodiments, step 2112 is optional, and the terminal 101 itself stores the first threshold.

In step 2113, the terminal 102 determines indication information to be sent based on the first threshold and the ratio between the EPREs of the at least two reference signal resource units.

In some embodiments, the terminal 102 may determine the indication information to be send to the network device 101 based on the first threshold and the ratio between the EPREs of the at least two reference signal resource units, so as to indicate the network device 101 whether to compensate for the array gain loss through the indication information.

In some embodiments, in a case that the first threshold is greater than the ratio between the EPREs of the at least two reference signal resource units, the terminal 102 may determine that the indication information sent to the network device 101 is used to indicate the network device 101 to compensate for the array gain loss.

In some embodiments, in a case that the first threshold is less than the ratio between the EPREs of the at least two reference signal resource units, the terminal 102 may determine that the indication information sent to the network device 101 is used to indicate the network device 101 not to compensate for the array gain loss.

In some embodiments, step 2113 is optional, and the terminal 102 may default to that the indication information sent to the network device 101 is used to indicate the network device 101 to compensate for the array gain loss.

In step 2114, the terminal 102 sends the indication information to the network device 101.

In some embodiments, the terminal 102 sends the indication information to the network device 101 to indicate the network device 101 whether to compensate for the array gain loss.

In some embodiments, the indication information is configured to indicate the network device whether to compensate for the array gain loss.

In some embodiments, the name of the indication information is not limited, and may be, for example, "compensation execution information", "compensation indication information", etc.

In some embodiments, step 2114 is optional, and the network device 101 may compensate for the array gain loss of the first beam by default.

In some embodiments, step 2114 is optional, and the network device 101 may comprehensively consider the array gain loss of the terminal 102 based on the received first information, so as to determine whether to compensate the array gain loss of the terminal 102.

In step 2115, the network device 101 determines a first coefficient based on the first information.

In some embodiments, the network device 101 may determine the first coefficient based on the first information, and the first coefficient is configured to compensate for the array gain loss of the first beam.

In some embodiments, the name of the first coefficient is not limited, and it may be, for example, "compensation coefficient", "array gain loss coefficient", "subband precoding coefficient", "delay network coefficient", etc.

In some embodiments, the specific form of the first coefficient is not limited, and it may be, for example, a compensation coefficient of a delay network, a precoding coefficient of a reference signal resource unit, a compensation coefficient of a phase network, etc.

In an optional embodiment, each transmitting antenna of the network device 101 has a time delay circuit, that is, the network device 101 has a time delay network, and the first coefficient may be a compensation coefficient of the time delay network, where the first coefficient may be determined in the following manner.

When an adjustment delay on a n-th time delay circuit of the network device is: *τ^{n'}*, a time domain response of the adjustment delay is: *δ*(*t* - *τ^{n'}*), which is a time domain impact response, and a corresponding frequency domain response is: *e*^{*-j*2*πfₘτⁿ'*}. It may be seen that the frequency domain response corresponding to the time domain response generated by the time delay circuit is a parameter related to a carrier frequency. Therefore, it may be concluded that a normalized response of a subcarrier fm is:
${\left[{w}_{m}\right]}_{n} = \frac{1}{\sqrt{{N}_{t}}} {e}^{- j 2 {πf}_{m} {τ}^{n ′}}$ (formula 2)

In formula 2, the subcarrier fm is a subcarrier of the first beam, Nₜ is the number of antenna elements in the network device, and wₘ is a normalized phase shift generated on a m-th subcarrier in the frequency domain by adjusting the delay on a n-th antenna element.

The above normalized response (i.e., formula 2) is in the same form as a network device antenna array response. A network device antenna array response vector is: ${f}_{m} \left(θ\right) = \frac{1}{\sqrt{{N}_{t}}} {\left[1, {e}^{j 2 πd \frac{{f}_{m}}{c} sin θ}, {e}^{j 4 πd \frac{{f}_{m}}{c} sin θ},…, {e}^{j \left({N}_{t}-1\right) 2 πd \frac{{f}_{m}}{c} sin θ}\right]}^{T}$ (formula 3)

In formula 3, $d = \frac{λ}{2}$, λ represents a wavelength of a center carrier frequency, c represents the speed of light, $\frac{d}{c}$ represents one time unit, and *θ* represents that a direction of the above array response vector is *θ*.

The traditional beamforming vector is: $a = \frac{1}{\sqrt{{N}_{t}}} \left[1, {e}^{- j 2 π \frac{d}{c} {f}_{c} sin θ}, {e}^{- j 2 π 2 \frac{d}{c} {f}_{c} sin θ},…, {e}^{- j 2 π \left({N}_{t}-1\right) \frac{d}{c} {f}_{c} sin θ}\right]$ (formula 4)

As may be seen from formula 4, the beamforming vector expressed in the above formula does not take into account the difference in array responses of different subcarriers in the first beam in the frequency domain, which causes array gain loss. By adding a layer of delay network on the basis of the traditional beamforming vector, the selectivity of frequency domain responses of different subcarriers may be offset by the delay network, and the adjusted first beam points to the direction *θ*.

Moreover, in order to maximize the array gain in the direction *θ*, the value of *τ^{n'}* needs to be changed. Therefore, the first information reported by the terminal 102 is used so that the network device 101 may estimate the position and direction of the terminal 102, so as to determine the changed value of *τ*^{*n*'}. Thus, by determining the *τ^{n'}* values of all the time delay circuits in the network device, the compensation coefficient (i.e., the first coefficient) of the network device for the beam squint may be determined.

In some embodiments, other methods for determining the first coefficient are similar to the above method and are not repeated here.

It may be understood that the above description of the method for determining the first coefficient is only an example and should not cause a limitation on the present disclosure. The present disclosure does not limit the method for determining the first coefficient and also does not limit the specific form of the first coefficient.

In some embodiments, step 2115 is optional, and the network device 101 may directly obtain the first coefficient.

In step 2116, based on the first coefficient, the network device 101 compensates for the array gain loss of the first beam, and adjusts the first beam to a target beam direction.

In some embodiments, based on the first coefficient, the network device 101 may compensate for the array gain loss of the terminal 102 caused by the squint of the first beam, and adjust the first beam to the target beam direction, which compensates for the array gain loss of the terminal 102.

In some embodiments, the target beam direction may be a direction toward an actual location of the terminal, a direction of a center carrier frequency configured by the network device for the first beam, etc. The present disclosure does not limit the specific direction referred to by the target beam direction.

For example, taking an example that the first coefficient is the precoding coefficient of the reference signal resource unit and the target beam direction is the direction toward the actual location of the terminal, the network device 101 may adjust the direction of the first beam to the direction toward the actual location of the terminal 102 based on the determined precoding coefficient of the reference signal resource unit, so as to reduce the array gain loss of the terminal 102 and compensate for the array gain loss of the first beam.

In some embodiments, step 2116 is optional, and in a case that the array gain loss of the terminal 102 is small, the network device 101 may not compensate for the array gain loss of the first beam.

The communication methods involved in the embodiments of the present disclosure may include at least one of step 2101 to step 2116. For example, step 2101 may be implemented as an independent embodiment, step 2104 may be implemented as an independent embodiment, steps 2101+2102 may be implemented as an independent embodiment, and steps 2101+2103+2104 may be implemented as an independent embodiment, but the present disclosure is not limited thereto.

In some embodiments, step 2102, step 2103, step 2104, step 2105 and step 2106 may be performed simultaneously.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

In some embodiments, names of information and the like are not limited to those specified in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, acquiring from an upper layer, obtaining via processing by itself, autonomously implementing, and other meanings.

In some embodiments, the terms such as "send", "transmit", "report", "deliver", "transmit", "bidirectional transmission", "send and/or receive" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

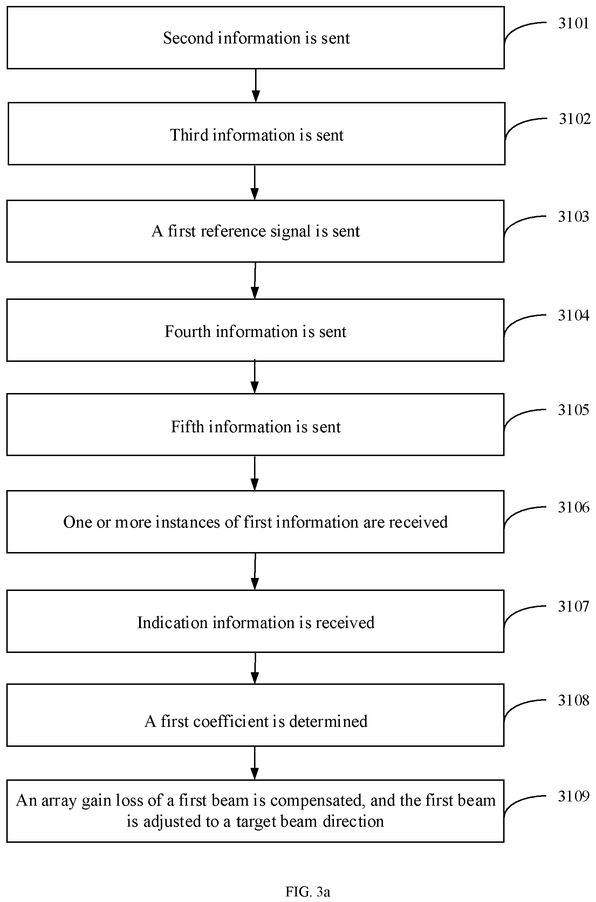

FIG. 3a is a schematic flowchart of a communication method according to an embodiment of the present disclosure. As shown in FIG. 3a, the embodiment of the present disclosure relates to a communication method, which is performed by a network device 101, and includes the following steps.

In step 3101, second information is sent.

For step 3101, reference may be made to step 2101 in FIG. 2 and other related parts in the embodiment involved in FIG. 2, which will not be repeated here.

In some embodiments, the network device 101 sends the second information to the terminal 102 to indicate the terminal 102 whether to send one or more instances of first information, but the present disclosure is not limited to this, and the network device 101 may also send the second information to other entities.

In some embodiments, step 3101 is omitted and the above function is default.

In some embodiments, step 3101 is optional, and the terminal 102 sends one or more instances of first information by default.

In step 3102, third information is sent.

For step 3102, reference may be made to step 2103 in FIG. 2 and other related parts of the embodiment involved in FIG. 2, which will not be repeated here.

In some embodiments, the network device 101 sends the third information to the terminal 102 to assist the terminal 101 in determining indication information to be sent to the network device 102, but the present disclosure is not limited to this, and the second information may also be sent to other entities.

In some embodiments, the third information indicates a first threshold.

In some embodiments, step 3102 is omitted and the above function is default.

In some embodiments, step 3102 is optional, and the terminal 102 may obtain a first threshold through a protocol agreement.

In step 3103, a first reference signal is sent.

For step 3103, reference may be made to step 2104 in FIG. 2 and other related parts of the embodiment involved in FIG. 2, which will not be repeated here.

In some embodiments, the network device 101 sends the first reference signal to the terminal 102, the terminal 102 may determine one or more instances of first information based on the first reference signal, but the present disclosure is not limited to this, and the network device 101 may also send the first reference signal to other entities.

In some embodiments, step 3103 is omitted and the above function is default.

In some embodiments, step 3103 is optional, and the terminal 102 may obtain the first reference signal in other ways, or the terminal 102 may directly obtain one or more instances of first information.

In step 3104, fourth information is sent.

For step 3104, reference may be made to step 2105 in FIG. 2 and other related parts of the embodiment involved in FIG. 2, which will not be repeated here.

In some embodiments, the network device 101 sends the fourth information to the terminal 102 to indicate the terminal 102 to send one instance of first information, or send a plurality of instances of first information, but the present disclosure is not limited to this, and the network device 101 may also send the fourth information to other entities.

In some embodiments, step 3104 is omitted and the above function is default.

In some embodiments, step 3104 is optional, and the terminal 102 sends one instance of first information to the network device 101 by default, or sends a plurality of instances of first information to the network device 101 by default.

In step 3105, fifth information is sent.

For step 3105, reference may be made to step 2106 in FIG. 2 and other related parts of the embodiment involved in FIG. 2, which will not be repeated here.

In some embodiments, the network device 101 sends the fifth information to the terminal 102 to indicate a method by which the terminal 102 determines one or more instances of first information, but the present disclosure is not limited to this, and the network device 101 may also send the fifth information to other devices.

In some embodiments, step 3105 is omitted and the above function is default.

In some embodiments, step 3105 is optional, and the terminal 102 may determine a method for determining one or more instances of first information based on a protocol agreement.

In step 3106, one or more instances of first information are received.

For step 3106, reference may be made to step 2111 in FIG. 2 and other related parts of the embodiment involved in FIG. 2, which will not be repeated here.

In some embodiments, the network device 101 may receive the one or more instances of first information sent from the terminal 102, which indicate an array gain loss of a first beam sent from the network device 101 to the terminal 102, but the present disclosure is not limited to this, and the network device 101 may also obtain the one or more instances of first information through other devices.

In step 3107, indication information is received.

For step 3107, reference may be made to step 2114 in FIG. 2 and other related parts of the embodiment involved in FIG. 2, which will not be repeated here.

In some embodiments, the network device 101 receives the indication information sent from the terminal 102, the network device 101 may determine whether to compensate for the array gain loss based on the indication information, but the present disclosure is not limited to this, and the network device 101 may also obtain the indication information through other devices.

In some embodiments, step 3107 is omitted and the above function is default.

In some embodiments, step 3107 is optional, and the network device 101 compensates for the array gain loss by default.

In step 3108, a first coefficient is determined.

For step 3108, reference may be made to step 2115 in FIG. 2 and other related parts of the embodiment involved in FIG. 2, which will not be repeated here.

In some embodiments, the network device 101 may determine the first coefficient based on the one or more instances of first information, the network device 101 may adjust the first beam to the target beam direction based on the first coefficient, but the present disclosure is not limited to this, and the network device 101 may also determine the first coefficient based on other information.

In some embodiments, step 3108 is omitted and the above function is default.

In some embodiments, step 3108 is optional, and the network device 101 only obtains the array gain loss of the first beam, and does not compensate for the array gain loss of the first beam.

In step 3109, the array gain loss of the first beam is compensated, and the first beam is adjusted to a target beam direction.

For step 3109, reference may be made to step 2116 in FIG. 2 and other related parts of the embodiment involved in FIG. 2, which will not be repeated here.

In some embodiments, based on the first coefficient, the network device 101 may compensate for the array gain loss of the first beam and adjust the first beam to the target beam direction, but the present disclosure is not limited to this, and the network device 101 may also adjust the first beam to the target beam direction through other information.

In some embodiments, step 3109 is omitted and the above function is default.

In some embodiments, step 3109 is optional, and the network device 101 only obtains the array gain loss of the first beam, and does not compensate for the array gain loss of the first beam.

For detailed descriptions of steps 3101-3109, reference may be made to the embodiment shown in FIG. 2.

The communication methods involved in the embodiments of the present disclosure may include at least one of step 3101 to step 3109. For example, step 3101 may be implemented as an independent embodiment, and step 3106 may be implemented as an independent embodiment, but the present disclosure is not limited to this.

In some embodiments, step 3101, step 3102, step 3103, step 3104, step 3105, step 3107, step 3108, and step 3109 are optional, and one or more of these steps may be omitted or replaced in different embodiments.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

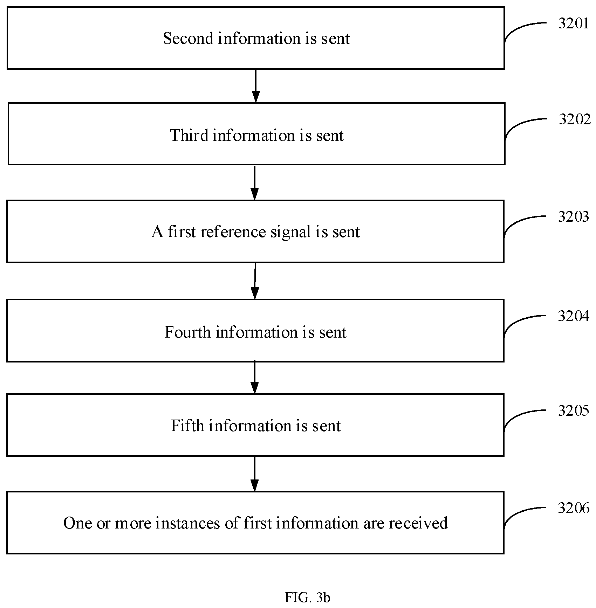

FIG. 3b is a schematic flowchart of a communication method according to an embodiment of the present disclosure. As shown in FIG. 3b, the embodiment of the present disclosure relates to a communication method, which is performed by a network device 101, and includes the following steps.

In step 3201, second information is sent.

For step 3201, reference may be made to step 2101 in FIG. 2, step 3101 in FIG. 3a, and other related parts in the embodiments involved in FIG. 2 and FIG. 3a, which will not be repeated here.

In some embodiments, the network device 101 sends the second information to the terminal 102 to indicate the terminal 102 whether to send one or more instances of first information, but the present disclosure is not limited to this, and the network device 101 may also send the second information to other entities.

In some embodiments, step 3201 is omitted and the above function is default.

In some embodiments, step 3201 is optional, and the terminal 102 sends one or more instances of first information by default.

In step 3202, third information is sent.

For step 3202, reference may be made to step 2103 in FIG. 2, step 3102 in FIG. 3a, and other related parts in the embodiments involved in FIG. 2 and FIG. 3a, which will not be repeated here.

In some embodiments, the network device 101 sends the third information to the terminal 102 to assist the terminal 101 in determining indication information to be sent to the network device 102, but the present disclosure is not limited to this, and the second information may also be sent to other entities.

In some embodiments, the third information indicates a first threshold.

In some embodiments, step 3202 is omitted and the above function is default.

In some embodiments, step 3202 is optional, and the terminal 102 may obtain a first threshold through a protocol agreement.

In step 3203, a first reference signal is sent.

For step 3203, reference may be made to step 2104 in FIG. 2, step 3103 in FIG. 3a, and other related parts in the embodiments involved in FIG. 2 and FIG. 3a, which will not be repeated here.

In some embodiments, the network device 101 sends the first reference signal to the terminal 102, the terminal 102 may determine one or more instances of first information based on the first reference signal, but the present disclosure is not limited to this, and the network device 101 may also send the first reference signal to other entities.

In some embodiments, step 3203 is omitted and the above function is default.

In some embodiments, step 3203 is optional, and the terminal 102 may obtain the first reference signal in other ways, or the terminal 102 may directly obtain one or more instances of first information.

In step 3204, fourth information is sent.

For step 3204, reference may be made to step 2105 in FIG. 2, step 3104 in FIG. 3a, and other related parts in the embodiments involved in FIG. 2 and FIG. 3a, which will not be repeated here.

In some embodiments, the network device 101 sends the fourth information to the terminal 102 to indicate the terminal 102 to send one instance of first information, or send a plurality of instances of first information, but the present disclosure is not limited to this, and the network device 101 may also send the fourth information to other entities.

In some embodiments, step 3204 is omitted and the above function is default.

In some embodiments, step 3204 is optional, and the terminal 102 sends one instance of first information to the network device 101 by default, or sends a plurality of instances of first information to the network device 101 by default.

In step 3205, fifth information is sent.

For step 3205, reference may be made to step 2106 in FIG. 2, step 3105 in FIG. 3a, and other related parts in the embodiments involved in FIG. 2 and FIG. 3a, which will not be repeated here.

In some embodiments, the network device 101 sends the fifth information to the terminal 102 to indicate a method by which the terminal 102 determines one or more instances of first information, but the present disclosure is not limited to this, and the network device 101 may also send the fifth information to other devices.

In some embodiments, step 3205 is omitted and the above function is default.

In some embodiments, step 3205 is optional, and the terminal 102 may determine a method for determining one or more instances of first information based on a protocol agreement.

In step 3206, one or more instances of first information are received.

For step 3206, reference may be made to step 2111 in FIG. 2, step 3106 in FIG. 3a, and other related parts in the embodiments involved in FIG. 2 and FIG. 3a, which will not be repeated here.

In some embodiments, the network device 101 may receive the one or more instances of first information sent from the terminal 102, which indicate an array gain loss of a first beam sent from the network device 101 to the terminal 102, but the present disclosure is not limited to this, and the network device 101 may also obtain the one or more instances of first information through other devices.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

For detailed descriptions of steps 3201-3206, reference may be made to the embodiment shown in FIG. **2**.

The communication methods involved in the embodiments of the present disclosure may include at least one of step 3201 to step 3206. For example, step 3201 may be implemented as an independent embodiment, and step 3206 may be implemented as an independent embodiment, but the present disclosure is not limited to this.

In some embodiments, step 3201, step 3202, step 3203, step 3204 and step 3205 are optional, and one or more of these steps may be omitted or replaced in different embodiments.

In this implementation or example, unless there is any contradiction, the steps may be independent, arbitrarily combined or exchanged in order. The optional implementations or optional examples may be arbitrarily combined, and may also be arbitrarily combined with other implementations or examples.

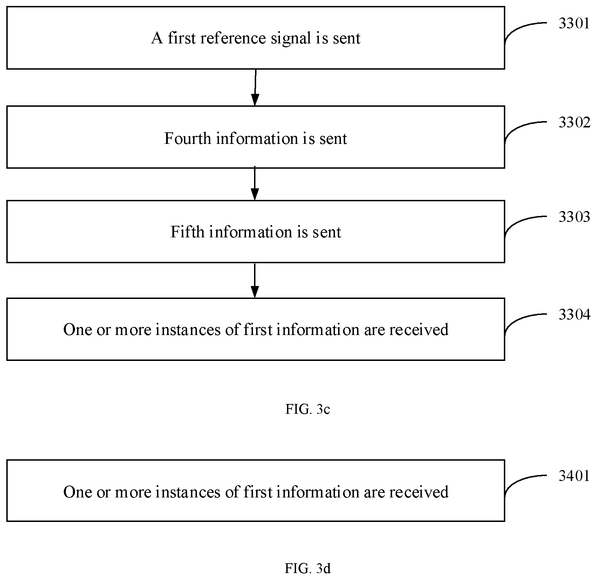

FIG. 3c is a schematic flowchart of a communication method according to an embodiment of the present disclosure. As shown in FIG. 3c, the embodiment of the present disclosure relates to a communication method, which is performed by a network device 101, and includes the following steps.

In step 3301, a first reference signal is sent.

For step 3301, reference may be made to step 2104 in FIG. 2, step 3103 in FIG. 3a, step 3203 in FIG. 3b, and other related parts in the embodiments involved in FIG. 2, FIG. 3a, and FIG. 3b, which will not be repeated here.

In some embodiments, the network device 101 sends the first reference signal to the terminal 102, the terminal 102 may determine one or more instances of first information based on the first reference signal, but the present disclosure is not limited to this, and the network device 101 may also send the first reference signal to other entities.

In some embodiments, step 3301 is omitted and the above function is default.

In some embodiments, step 3301 is optional, and the terminal 102 may obtain the first reference signal in other ways, or the terminal 102 may directly obtain one or more instances of first information.

In step 3302, fourth information is sent.

For step 3302, reference may be made to step 2105 in FIG. 2, step 3104 in FIG. 3a, step 3204 in FIG. 3b, and other related parts in the embodiments involved in FIG. 2, FIG. 3a, and FIG. 3b, which will not be repeated here.

In some embodiments, the network device 101 sends the fourth information to the terminal 102 to indicate the terminal 102 to send one instance of first information, or send a plurality of instances of first information, but the present disclosure is not limited to this, and the network device 101 may also send the fourth information to other entities.

In some embodiments, step 3302 is omitted and the above function is default.

In some embodiments, step 3302 is optional, and the terminal 102 sends one instance of first information to the network device 101 by default, or sends a plurality of instances of first information to the network device 101 by default.

In step 3303, fifth information is sent.

For step 3303, reference may be made to step 2106 in FIG. 2, step 3105 in FIG. 3a, step 3205 in FIG. 3b, and other related parts in the embodiments involved in FIG. 2, FIG. 3a, and FIG. 3b, which will not be repeated here.

In some embodiments, the network device 101 sends the fifth information to the terminal 102 to indicate a method by which the terminal 102 determines one or more instances of first information, but the present disclosure is not limited to this, and the network device 101 may also send the fifth information to other devices.

In some embodiments, step 3303 is omitted and the above function is default.

In some embodiments, step 3303 is optional, and the terminal 102 may determine a method for determining one or more instances of first information based on a protocol agreement.

In step 3304, one or more instances of first information are received.

For step 3304, reference may be made to step 2111 in FIG. 2, step 3106 in FIG. 3a, step 3206 in FIG. 3b, and other related parts in the embodiments involved in FIG. 2, FIG. 3a, and FIG. 3b, which will not be repeated here.

In some embodiments, the network device 101 may receive the one or more instances of first information sent from the terminal 102, which indicate an array gain loss of a first beam sent from the network device 101 to the terminal 102, but the present disclosure is not limited to this, and the network device 101 may also obtain the one or more instances of first information through other devices.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

For detailed descriptions of steps 3301-3304, reference may be made to the embodiment shown in FIG. 2**.**

The communication methods involved in the embodiments of the present disclosure may include at least one of step 3301 to step 3304. For example, step 3301 may be implemented as an independent embodiment, and step 3304 may be implemented as an independent embodiment, but the present disclosure is not limited to this.

In some embodiments, step 3301, step 3302, and step 3303 are optional, and one or more of these steps may be omitted or replaced in different embodiments.

In this implementation or example, unless there is any contradiction, the steps may be independent, arbitrarily combined or exchanged in order. The optional implementations or optional examples may be arbitrarily combined, and may also be arbitrarily combined with other implementations or examples.

FIG. 3d is a schematic flowchart of a communication method according to an embodiment of the present disclosure. As shown in FIG. 3d, the embodiment of the present disclosure relates to a communication method, which is performed by a network device 101, and includes the following steps.

In step 3401, one or more instances of first information are received.

For step 3301, reference may be made to step 2111 in FIG. 2, step 3106 in FIG. 3a, step 3206 in FIG. 3b, step 3304 in FIG. 3c and other related parts in the embodiments involved in FIG. 2, FIG. 3a, FIG. 3b and FIG. 3c, which will not be repeated here.

In some embodiments, the network device 101 receives the one or more instances of first information sent from the terminal 102, and the one or more instances of first information indicate an array gain loss of a first beam sent from the network device to the terminal.

Optionally, in some embodiments, the network device 101 may further send second information to the terminal 102, and the second information is configured to indicate the terminal whether to send the one or more instances of first information.

Optionally, in some embodiments, the network device 101 may further send third information to the terminal 102, the third information indicates a first threshold, the first threshold is configured to assist the terminal 102 in sending indication information to the network device 101, and the indication information is configured to indicate the network device 101 whether to compensate for the array gain loss.

Optionally, in some embodiments, the network device 101 may further send a first reference signal to the terminal 102, and the first reference signal is configured for the terminal 102 to determine the one or more instances of first information.

Optionally, in some embodiments, the network device 101 may further send fourth information to the terminal 102, and the fourth information is configured to indicate the terminal 102 to send one instance of first information or a plurality of instances of first information.

Optionally, in some embodiments, the fourth information includes at least two reference signal resource unit indexes of the first reference signal.

Optionally, in some embodiments, the network device 101 may further send fifth information to the terminal 102, and the fifth information indicates a method by which the terminal 102 determines the one or more instances of first information.

Optionally, in some embodiments, the network device 101 may further receive indication information sent from the terminal 102.

Optionally, in some embodiments, the network device 101 may further determine a first coefficient based on the one or more instances of first information, and the first coefficient is configured to compensate for the array gain loss of the first beam.

Optionally, in some embodiments, the network device 101 may further adjust the first beam to a target beam direction based on the first coefficient.

Optionally, in some embodiments, the target beam direction includes any one of: a direction toward an actual location of the terminal; and a direction of a center carrier frequency configured by the network device for the first beam.

For a detailed description of step 3401, reference may be made to the embodiment shown in FIG. 2.

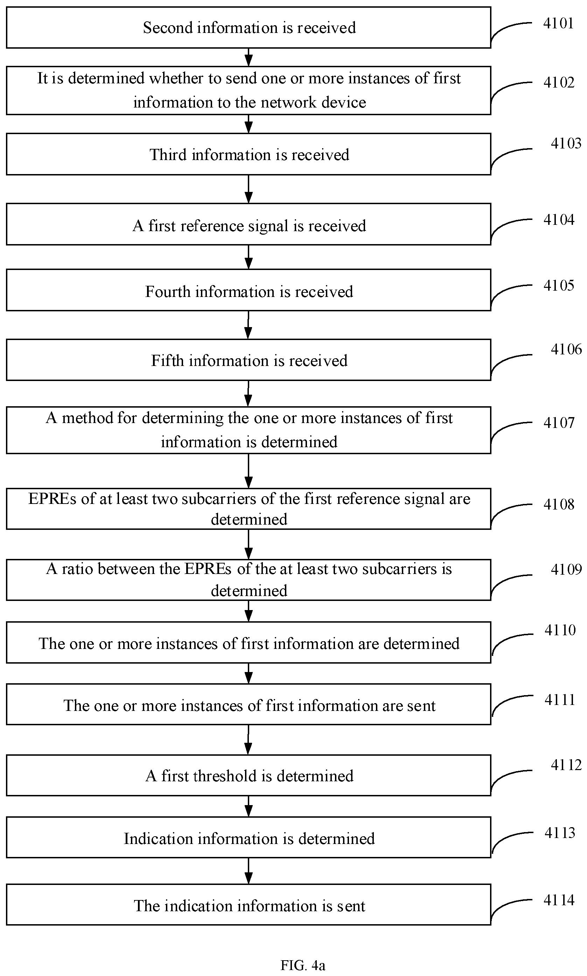

FIG. 4a is a schematic flowchart of a communication method according to an embodiment of the present disclosure. As shown in FIG. 4a, the embodiment of the present disclosure relates to a communication method, which is performed by a terminal 102, and includes the following steps.

In step 4101, second information is received.

For step 4101, reference may be made to step 2101 in FIG. 2 and other related parts of the embodiment involved in FIG. 2, which will not be repeated here.

In some embodiments, the terminal 102 may receive the second information sent from the network device 101, the terminal 102 determines whether to send one or more instances of first information, but the present disclosure is not limited to this, and the terminal 102 may also obtain the second information through other entities.

In some embodiments, step 4101 is omitted and the above function is default.

In some embodiments, step 4101 is optional, and the terminal 102 sends one or more instances of first information to the network device 101 by default.

In step 4102, it is determined whether to send one or more instances of first information to the network device 101.

For step 4102, reference may be made to step 2102 in FIG. 2 and other related parts of the embodiment involved in FIG. 2, which will not be repeated here.

In some embodiments, the terminal 102 may determine whether to send the one or more instances of first information to the network device 101 based on a protocol agreement or the second information, but the present disclosure is not limited to this, and the terminal 102 may also determine whether to send the one or more instances of first information based on other information.

In some embodiments, step 4102 is omitted and the above function is default.

In some embodiments, step 4102 is optional, and the terminal 102 sends the one or more instances of first information to the network device 101 by default.

In step 4103, third information is received.

For step 4103, reference may be made to step 2103 in FIG. 2 and other related parts of the embodiment involved in FIG. 2, which will not be repeated here.

In some embodiments, the terminal 102 may receive the third information sent from the network device 101 to obtain a first threshold, but the present disclosure is not limited to this, and the terminal 102 may also receive the third information sent from other entities.

In some embodiments, the terminal 102 obtains the third information from an upper layer.

In some embodiments, step 4103 is omitted and the above function is default.

In some embodiments, step 4103 is optional, and the terminal 102 determines the third information based on a protocol agreement, or the terminal 102 itself stores the first threshold.

In step 4104, a first reference signal is received.

For step 4104, reference may be made to step 2104 in FIG. 2 and other related parts of the embodiment involved in FIG. 2, which will not be repeated here.

In some embodiments, the terminal 102 may receive the first reference signal sent from the network device 101 to indicate that the terminal 102 may determine the one or more instances of first information based on the first reference signal, but the present disclosure is not limited to this, and the terminal 102 may also receive the first reference signal through other entities.

In some embodiments, step 4104 is omitted and the above function is default.

In some embodiments, step 4104 is optional, and the terminal 102 does not need to receive the first reference signal and may directly obtain the one or more instances of first information.

In step 4105, fourth information is received.

For step 4105, reference may be made to step 2105 in FIG. 2 and other related parts of the embodiment involved in FIG. 2, which will not be repeated here.

In some embodiments, the terminal 102 may receive the fourth information sent from the network device 101, the terminal 102 may determine to send one instance of first information, or send a plurality of instances of first information, but the present disclosure is not limited to this, and the terminal 102 may also obtain the fourth information through other entities.

In some embodiments, step 4105 is omitted and the above function is default.

In some embodiments, step 4105 is optional, and the terminal 102 sends one instance of first information to the network device 101 by default, or sends a plurality of instances of first information to the network device 101 by default.

In step 4106, fifth information is received.

For step 4106, reference may be made to step 2106 in FIG. 2 and other related parts of the embodiment involved in FIG. 2, which will not be repeated here.

In some embodiments, the terminal 102 may receive the fifth information sent from the network device 101, the terminal 102 obtains a method for determining the one or more instances of first information, but the present disclosure is not limited to this, and the terminal 102 may also obtain the fifth information through other entities.

In some embodiments, step 4106 is omitted and the above function is default.

In some embodiments, step 4106 is optional, and the terminal 102 may obtain the method for determining the one or more instances of first information based on a protocol agreement, or the terminal 102 itself stores the method for determining the one or more instances of first information.

In step 4107, a method for determining the one or more instances of first information is determined.

For step 4107, reference may be made to step 2107 in FIG. 2 and other related parts of the embodiment involved in FIG. 2, which will not be repeated here.

In some embodiments, the terminal 102 may determine the method for determining the one or more instances of first information through the fifth information sent from the network device 101 or based on a protocol agreement, but the present disclosure is not limited to this, and the terminal 102 may also determine the method for determining the one or more instances of first information in other ways.

In some embodiments, step 4107 is omitted and the above function is default.

In some embodiments, step 4107 is optional, and the terminal 102 may default to the method for determining the one or more instances of first information.

In step 4108, EPREs of at least two reference signal resource units of the first reference signal are determined.

For step 4108, reference may be made to step 2108 in FIG. 2 and other related parts of the embodiment involved in FIG. 2, which will not be repeated here.

In some embodiments, the terminal 102 may obtain reference signal resource unit indexes of the first reference signal based on the fourth information sent from the network device 101 or based on a protocol agreement, so as to measure the reference signal resource units corresponding to the reference signal resource unit indexes, so that the terminal 102 may determine the EPREs of the at least two reference signal resource units of the first reference signal, but the present disclosure is not limited to this, and the terminal 102 may also directly obtain the EPREs of the at least two reference signal resource units of the first reference signal through other entities.

In some embodiments, step 4108 is omitted and the above function is default.

In some embodiments, step 4108 is optional, and the terminal 102 may directly obtain the EPREs of the at least two reference signal resource units of the first reference signal through other entities.

In step 4109, a ratio between the EPREs of the at least two reference signal resource units is determined.

For step 4109, reference may be made to step 2109 in FIG. 2 and other related parts of the embodiment involved in FIG. 2, which will not be repeated here.

In some embodiments, the terminal 102 may determine the numerator and denominator in the above ratio based on the fifth information sent from the network device 101 or based on a protocol agreement, the terminal 102 may determine the ratio between the EPREs of the at least two reference signal resource units, but the present disclosure is not limited to this, and the terminal 102 may also directly obtain the ratio between the EPREs of the at least two reference signal resource units through other entities.

In some embodiments, step 4109 is omitted and the above function is default.

In some embodiments, step 4109 is optional, and the terminal 102 may directly obtain the ratio between the EPREs of the at least two reference signal resource units through other entities.

In step 4110, the one or more instances of first information are determined.

For step 4110, reference may be made to step 2110 in FIG. 2 and other related parts of the embodiment involved in FIG. 2, which will not be repeated here.

In some embodiments, the terminal 102 may determine the one or more instances of first information based on the ratio between the EPREs of the two reference signal resource units of the first reference signal, but the present disclosure is not limited to this, and the terminal 102 may also directly obtain the one or more instances of first information through other entities.

In some embodiments, step 4110 is omitted and the above function is default.

In some embodiments, step 4110 is optional, and the terminal 102 may directly obtain the one or more instances of first information through other entities.

In step 4111, the one or more instances of first information are sent.

For step 4111, reference may be made to step 2111 in FIG. 2 and other related parts of the embodiment involved in FIG. 2, which will not be repeated here.

In some embodiments, the terminal 102 sends the one or more instances of first information to the network device 101, the network device 101 may obtain an array gain loss of a first beam, but the present disclosure is not limited to this, and the terminal 102 may also directly send the one or more instances of first information to other entities.

In step 4112, a first threshold is determined.

For step 4112, reference may be made to step 2112 in FIG. 2 and other related parts of the embodiment involved in FIG. 2, which will not be repeated here.

In some embodiments, the terminal 102 may determine the first threshold based on the third information or based on a protocol agreement, and then determine indication information to be sent to the network device 101, but the present disclosure is not limited to this, and the terminal 102 may also determine the first threshold through other information, or the terminal 102 itself stores the first threshold.

In some embodiments, step 4112 is omitted and the above function is default.

In some embodiments, step 4112 is optional, and the terminal 102 itself stores the first threshold, or when the network device 101 only expects to obtain the first information, the terminal 102 may not determine the first threshold.

In step 4113, indication information to be sent is determined.

For step 4113, reference may be made to step 2113 in FIG. 2 and other related parts of the embodiment involved in FIG. 2, which will not be repeated here.

In some embodiments, the terminal 102 may determine the indication information to be sent to the network device 102 based on the first threshold and the ratio between the EPREs of the two reference signal resource units, but the present disclosure is not limited to this, and the terminal 102 may also determine the indication information to be sent through other information.

In some embodiments, step 4113 is omitted and the above function is default.

In some embodiments, step 4113 is optional, and when the network device 101 only expects to obtain the first information, the terminal 102 may not determine the first threshold.

In step 4114, the indication information is sent.

For step 4114, reference may be made to step 2114 in FIG. 2 and other related parts of the embodiment involved in FIG. 2, which will not be repeated here.

In some embodiments, the terminal 102 may send the indication information to the network device 101 to indicate the network device 101 whether to compensate for the array gain loss, but the present disclosure is not limited to this, and the terminal 102 may also send the indication information to other entities.

In some embodiments, step 4114 is omitted and the above function is default.

In some embodiments, step 4114 is optional, and when the network device 101 only expects to obtain the first information, or when the terminal 102 compensates for the array gain loss or does not compensate for the array gain loss by default, the terminal 102 may not send the indication information.

In some embodiments, step 4114 is optional, and the network device 101 may comprehensively consider the array gain loss of the terminal 102 based on the first information sent from the terminal 102, so as to determine whether to compensate for the gain loss of the terminal 102.

The communication methods involved in the embodiments of the present disclosure may include at least one of step 4101 to step 4114. For example, step 4101 may be implemented as an independent embodiment, step 4103 may be implemented as an independent embodiment, step 4111 may be implemented as an independent embodiment, steps 4101+4102+4103 may be implemented as an independent embodiment, and steps 4101+4103+4104 may be implemented as an independent embodiment, but the present disclosure is not limited to this.

In some embodiments, step 4101, step 4102, step 4103, step 4104, step 4105, step 4106, step 4107, step 4108, step 4109, step 4110, step 4112, step 4113, and step 4114 are optional, and one or more of these steps may be omitted or replaced in different embodiments.

In some embodiments, step 4101, step 4103, step 4104, step 4105 and step 4106 may be performed simultaneously.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

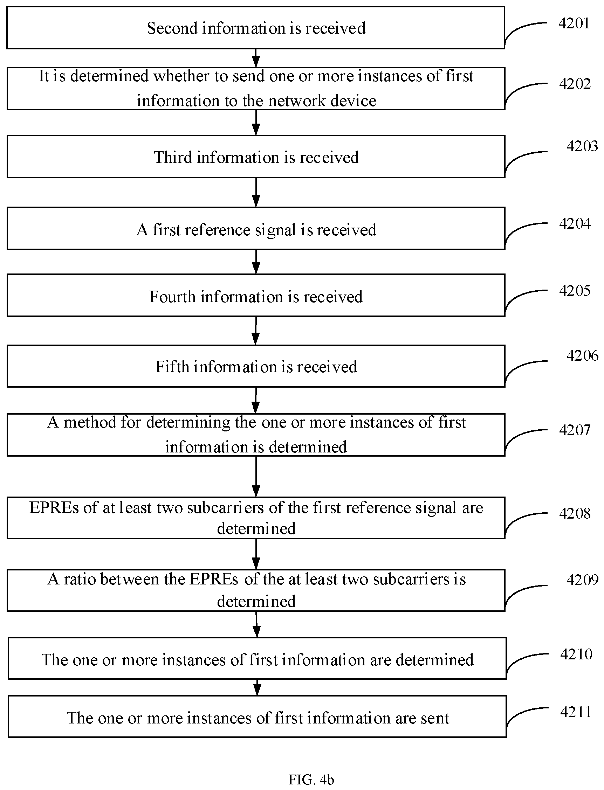

FIG. 4b is a schematic flowchart of a communication method according to an embodiment of the present disclosure. As shown in FIG. 4b, the embodiment of the present disclosure relates to a communication method, which is performed by a terminal 102, and includes the following steps.

In step 4201, second information is received.

For step 4201, reference may be made to step 2101 in FIG. 2, step 4101 in FIG. 4a, and other related parts in the embodiments involved in FIG. 2 and FIG. 4a, which will not be repeated here.

In some embodiments, the terminal 102 may receive the second information sent from the network device 101, the terminal 102 may determine whether to send one or more instances of first information, but the present disclosure is not limited to this, and the terminal 102 may also obtain the second information through other entities.

In some embodiments, step 4201 is omitted and the above function is default.

In some embodiments, step 4201 is optional, and the terminal 102 sends one or more instances of first information to the network device 101 by default.

In step 4202, it is determined whether to send one or more instances of first information to the network device 101.

For step 4202, reference may be made to step 2102 in FIG. 2, step 4102 in FIG. 4a, and other related parts of the embodiments involved in FIG. 2 and FIG. 4a, which will not be repeated here.

In some embodiments, the terminal 102 may determine whether to send one or more instances of first information to the network device 101 based on a protocol agreement or the second information, but the present disclosure is not limited to this, and the second information may also be sent to other entities.

In some embodiments, step 4202 is omitted and the above function is default.

In some embodiments, step 4202 is optional, and the terminal 102 sends one or more instances of first information to the network device 101 by default.

In step 4203, third information is received.

For step 4203, reference may be made to step 2103 in FIG. 2, step 4103 in FIG. 4a, and other related parts in the embodiments involved in FIG. 2 and FIG. 4a, which will not be repeated here.

In some embodiments, the terminal 102 may receive the third information sent from the network device 101 to obtain a first threshold, but the present disclosure is not limited to this, and the terminal 102 may also receive the third information sent from other entities.

In some embodiments, the terminal 102 obtains the third information from an upper layer.

In some embodiments, step 4203 is omitted and the above function is default.

In some embodiments, step 4203 is optional, and the terminal 102 determines the third information based on a protocol agreement, or the terminal 102 itself stores a first threshold.

In step 4204, a first reference signal is received.

For step 4204, reference may be made to step 2104 in FIG. 2, step 4104 in FIG. 4a, and other related parts of the embodiments involved in FIG. 2 and FIG. 4a, which will not be repeated here.

In some embodiments, the terminal 102 may receive the first reference signal sent from the network device 101 to indicate that the terminal 102 may determine the one or more instances of first information based on the first reference signal, but the present disclosure is not limited to this, and the terminal 102 may also receive the first reference signal through other entities.

In some embodiments, step 4204 is omitted and the above function is default.

In some embodiments, step 4204 is optional, and the terminal 102 does not need to receive the first reference signal and may directly obtain the one or more instances of first information.

In step 4205, fourth information is received.

For step 4205, reference may be made to step 2105 in FIG. 2, step 4105 in FIG. 4a, and other related parts in the embodiments involved in FIG. 2 and FIG. 4a, which will not be repeated here.

In some embodiments, the terminal 102 may receive the fourth information sent from the network device 101, the terminal 102 may determine to send one instance of first information, or send a plurality of instances of first information, but the present disclosure is not limited to this, and the terminal 102 may also obtain the fourth information through other entities.

In some embodiments, step 4205 is omitted and the above function is default.

In some embodiments, step 4205 is optional, and the terminal 102 sends one instance of first information to the network device 101 by default, or sends a plurality of instances of first information to the network device 101 by default.

In step 4206, fifth information is received.

For step 4206, reference may be made to step 2106 in FIG. 2, step 4106 in FIG. 4a, and other related parts in the embodiments involved in FIG. 2 and FIG. 4a, which will not be repeated here.

In some embodiments, the terminal 102 may receive the fifth information sent from the network device 101, the terminal 102 obtains a method for determining the one or more instances of first information, but the present disclosure is not limited to this, and the terminal 102 may also obtain the fifth information through other entities.

In some embodiments, step 4206 is omitted and the above function is default.

In some embodiments, step 4206 is optional, and the terminal 102 may obtain the method for determining the one or more instances of first information based on a protocol agreement, or the terminal 102 itself stores the method for determining the one or more instances of first information.

In step 4207, a method for determining the one or more instances of first information is determined.

For step 4207, reference may be made to step 2107 in FIG. 2, step 4107 in FIG. 4a, and other related parts of the embodiments involved in FIG. 2 and FIG. 4a, which will not be repeated here.

In some embodiments, the terminal 102 may determine the method for determining the one or more instances of first information through the fifth information sent from the network device 101 or based on a protocol agreement, but the present disclosure is not limited to this, and the terminal 102 may also determine the method for determining the one or more instances of first information in other ways.

In some embodiments, step 4207 is omitted and the above function is default.

In some embodiments, step 4207 is optional, and the terminal 102 may default to the method for determining the one or more instances of first information.

In step 4208, EPREs of at least two reference signal resource units of the first reference signal are determined.

For step 4208, reference may be made to step 2108 in FIG. 2, step 4108 in FIG. 4a, and other related parts of the embodiments involved in FIG. 2 and FIG. 4a, which will not be repeated here.

In some embodiments, the terminal 102 may obtain reference signal resource unit indexes of the first reference signal based on the fourth information sent from the network device 101 or based on a protocol agreement, so as to measure the reference signal resource units corresponding to the reference signal resource unit indexes. As such, the terminal 102 may determine the EPREs of the at least two reference signal resource units of the first reference signal. However, the present disclosure is not limited to this, and the terminal 102 may also directly obtain the EPREs of the at least two reference signal resource units of the first reference signal through other entities.

In some embodiments, step 4208 is omitted and the above function is default.

In some embodiments, step 4208 is optional, and the terminal 102 may directly obtain the EPREs of the at least two reference signal resource units of the first reference signal through other entities.

In step 4209, a ratio between the EPREs of the at least two reference signal resource units is determined.

For step 4209, reference may be made to step 2109 in FIG. 2, step 4109 in FIG. 4a, and other related parts in the embodiments involved in FIG. 2 and FIG. 4a, which will not be repeated here.

In some embodiments, the terminal 102 may determine the numerator and denominator in the above ratio based on the fifth information sent from the network device 101 or based on a protocol agreement, the terminal 102 may determine the ratio between the EPREs of the at least two reference signal resource units, but the present disclosure is not limited to this, and the terminal 102 may also directly obtain the ratio between the EPREs of the at least two reference signal resource units through other entities.

In some embodiments, step 4209 is omitted and the above function is default.

In some embodiments, step 4209 is optional, and the terminal 102 may directly obtain the ratio between the EPREs of the at least two reference signal resource units through other entities.

In step 4210, the one or more instances of first information are determined.

For step 4210, reference may be made to step 2110 in FIG. 2, step 4110 in FIG. 4a, and other related parts in the embodiments involved in FIG. 2 and FIG. 4a, which will not be repeated here.

In some embodiments, the terminal 102 may determine the one or more instances of first information based on the ratio between the EPREs of the two reference signal resource units of the first reference signal, but the present disclosure is not limited to this, and the terminal 102 may also directly obtain the one or more instances of first information through other entities.

In some embodiments, step 4210 is omitted and the above function is default.

In some embodiments, step 4210 is optional, and the terminal 102 may directly obtain the one or more instances of first information through other entities.

In step 4211, the one or more instances of first information are sent.

For step 4211, reference may be made to step 2111 in FIG. 2, step 4111 in FIG. 4a, and other related parts in the embodiments involved in FIG. 2 and FIG. 4a, which will not be repeated here.

In some embodiments, the terminal 102 sends the one or more instances of first information to the network device 101, the network device 101 may obtain an array gain loss of a first beam, but the present disclosure is not limited to this, and the terminal 102 may also directly send the one or more instances of first information to other entities.

The communication methods involved in the embodiments of the present disclosure may include at least one of step 4201 to step 4211. For example, step 4201 may be implemented as an independent embodiment, step 4203 may be implemented as an independent embodiment, step 4211 may be implemented as an independent embodiment, steps 4201+4202+4203 may be implemented as an independent embodiment, and steps 4201+4203+4204 may be implemented as an independent embodiment, but the present disclosure is not limited to this.

In some embodiments, step 4201, step 4202, step 4203, step 4204, step 4205, step 4206, step 4207, step 4208, step 4209, and step 4210 are optional, and one or more of these steps may be omitted or replaced in different embodiments.

In some embodiments, step 4201, step 4203, step 4204, step 4205 and step 4206 may be performed simultaneously.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

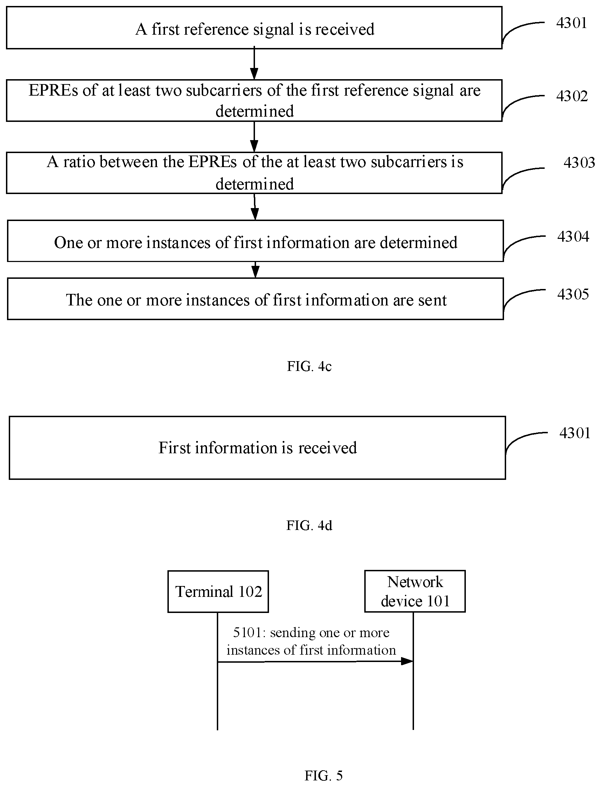

FIG. 4c is a schematic flowchart of a communication method according to an embodiment of the present disclosure. As shown in FIG. 4c, the embodiment of the present disclosure relates to a communication method, which is performed by a terminal 102, and includes the following steps.

In step 4301, a first reference signal is received.

For step 4301, reference may be made to step 2104 in FIG. 2, step 4104 in FIG. 4a, step 4204 in FIG. 4b and other related parts in the embodiments involved in FIG. 2, FIG. 4a and FIG. 4b, which will not be repeated here.

In some embodiments, the terminal 102 may receive the first reference signal sent from the network device 101 to indicate that the terminal 102 may determine one or more instances of first information based on the first reference signal, but the present disclosure is not limited to this, and the terminal 102 may also receive the first reference signal through other entities.

In some embodiments, step 4301 is omitted and the above function is default.

In some embodiments, step 4301 is optional, and the terminal 102 does not need to receive the first reference signal and may directly obtain one or more instances of first information.

In step 4302, EPREs of at least two reference signal resource units of the first reference signal are determined.

For step 4302, reference may be made to step 2108 in FIG. 2, step 4108 in FIG. 4a, step 4208 in FIG. 4b and other related parts in the embodiments involved in FIG. 2, FIG. 4a and FIG. 4b, which will not be repeated here.

In some embodiments, the terminal 102 may obtain reference signal resource unit indexes of the first reference signal based on fourth information sent from the network device 101 or based on a protocol agreement, so as to measure the reference signal resource units corresponding to the reference signal resource unit indexes. As such, the terminal 102 may determine the EPREs of the at least two reference signal resource units of the first reference signal. However, the present disclosure is not limited to this, and the terminal 102 may also directly obtain the EPREs of the at least two reference signal resource units of the first reference signal through other entities.

In some embodiments, step 4302 is omitted and the above function is default.

In some embodiments, step 4302 is optional, and the terminal 102 may directly obtain the EPREs of the at least two reference signal resource units of the first reference signal through other entities.

In step 4303, a ratio between the EPREs of the at least two reference signal resource units is determined.

For step 4303, reference may be made to step 2109 in FIG. 2, step 4109 in FIG. 4a, step 4209 in FIG. 4b and other related parts in the embodiments involved in FIG. 2, FIG. 4a and FIG. 4b, which will not be repeated here.

In some embodiments, the terminal 102 may determine the numerator and denominator in the above ratio based on fifth information sent from the network device 101 or based on a protocol agreement, the terminal 102 may determine the ratio between the EPREs of the at least two reference signal resource units, but the present disclosure is not limited to this, and the terminal 102 may also directly obtain the ratio between the EPREs of the at least two reference signal resource units through other entities.

In some embodiments, step 4303 is omitted and the above function is default.

In some embodiments, step 4303 is optional, and the terminal 102 may directly obtain the ratio between the EPREs of the at least two reference signal resource units through other entities.

In step 4304, one or more instances of first information are determined.

For step 4304, reference may be made to step 2110 in FIG. 2, step 4110 in FIG. 4a, step 4210 in FIG. 4b and other related parts in the embodiments involved in FIG. 2, FIG. 4a, and FIG. 4b, which will not be repeated here.

In some embodiments, the terminal 102 may determine the one or more instances of first information based on the ratio between the EPREs of the two reference signal resource units of the first reference signal, but the present disclosure is not limited to this, and the terminal 102 may also directly obtain the one or more instances of first information through other entities.

In some embodiments, step 4304 is omitted and the above function is default.

In some embodiments, step 4304 is optional, and the terminal 102 may directly obtain the one or more instances of first information through other entities.

In step 4305, the one or more instances of first information are sent.

For step 4305, reference may be made to step 2111 in FIG. 2, step 4111 in FIG. 4a, step 4211 in FIG. 4b and other related parts in the embodiments involved in FIG. 2, FIG. 4a and FIG. 4b, which will not be repeated here.

In some embodiments, the terminal 102 sends the one or more instances of first information to the network device 101, the network device 101 may obtain an array gain loss of a first beam, but the present disclosure is not limited to this, and the terminal 102 may also directly send the one or more instances of first information to other entities.

The communication methods involved in the embodiments of the present disclosure may include at least one of step 4301 to step 4305. For example, step 4301 may be implemented as an independent embodiment, step 4303 may be implemented as an independent embodiment, step 4305 may be implemented as an independent embodiment, steps 4301+4302+4305 may be implemented as an independent embodiment, and steps 4301+4303+4305 may be implemented as an independent embodiment, but the present disclosure is not limited to this.

In some embodiments, step 4301, step 4302, step 4303, step 4304, and step 4305 are optional, and one or more of these steps may be omitted or replaced in different embodiments.

In this implementation or example, unless there is any contradiction, the steps may be independent, arbitrarily combined or exchanged in order. The optional implementations or optional examples may be arbitrarily combined, and may be arbitrarily combined with any steps of other implementation or other examples.

FIG. 4d is a schematic flowchart of a communication method according to an embodiment of the present disclosure. As shown in FIG. 4d, the embodiment of the present disclosure relates to a communication method, which is performed by a terminal 102, and includes the following steps.

In step 4401, first information is received.

For step 4401, reference may be made to step 2111 in FIG. 2, step 4111 in FIG. 4a, step 4211 in FIG. 4b, step 4305 in FIG. 4c and other related parts in the embodiments involved in FIG. 2, FIG. 4a, FIG. 4b and FIG. 4c, which will not be repeated here.

In some embodiments, the terminal 102 sends the one or more instances of first information to the network device 101, and the one or more instances of first information indicate an array gain loss of a first beam sent from the network device 101 to the terminal 102.

Optionally, in some embodiments, the terminal 102 may receive second information sent from the network device 101, and the second information is configured to indicate the terminal 102 whether to send the one or more instances of first information.

Optionally, in some embodiments, the terminal 102 may receive third information sent from the network device 101, the third information includes a first threshold, the first threshold is configured to assist the terminal 102 in sending indication information to the network device 101, and the indication information is configured to indicate the network device 101 whether to compensate for the array gain loss.

Optionally, in some embodiments, the terminal 102 may receive a first reference signal sent from the network device 101, and the first reference signal is configured for the terminal 102 to determine the one or more instances of first information.

Optionally, in some embodiments, the terminal 102 may receive fourth information sent from the network device 101, and the fourth information is configured to indicate the terminal 102 to send one instance of first information or a plurality of instances of first information.

Optionally, in some embodiments, the fourth information includes at least two reference signal resource unit indexes of the first reference signal.

Optionally, in some embodiments, the terminal 102 may receive fifth information sent from the network device 101, and the fifth information indicates a method by which the terminal 102 determines the one or more instances of first information.

Optionally, in some embodiments, the terminal 102 may determine the one or more instances of first information.

Optionally, in some embodiments, the terminal 102 may determine EPREs of two reference signal resource units of the first reference signal, and the two reference signal resource units of the first reference signal are indicated by a reference signal resource unit index or a protocol agreement; and the terminal 102 may also determine the one or more instances of first information based on a ratio between the EPREs of the two reference signal resource units of the first reference signal.

Optionally, in some embodiments, the terminal 102 may determine the ratio between the EPREs of the two reference signal resource units based on the fifth information or a protocol agreement.

Optionally, in some embodiments, the terminal 102 may send the indication information to the network device 101 based on the first threshold and the ratio between the EPREs of the two reference signal resource units.

Optionally, in some embodiments, the terminal 102 may determine whether to send the one or more instances of first information to the network device 101 based on a protocol agreement.

Optionally, in some embodiments, the terminal 102 may determine a method for determining the one or more instances of first information based on a protocol agreement.

Optionally, in some embodiments, the terminal 102 may determine the first threshold based on a protocol agreement.

For a detailed description of step 4401, reference may be to the embodiment shown in FIG. 2.

FIG. 5 is a schematic interaction diagram of a communication method according to an embodiment of the present disclosure. As shown in FIG. 5, the embodiment of the present disclosure relates to a communication method, and the method includes the following steps.

In step 5101, a terminal 102 sends one or more instances of first information to a network device 101.

For optional implementations of step 5101, reference may be made to step 2111 in FIG. 2, step 3106 in FIG. 3a, step 3206 in FIG. 3b, step 3304 in FIG. 3c, step 3401 in FIG. 3d, step 4111 in FIG. 4a, step 4211 in FIG. 4b, step 4305 in FIG. 4c, step 4401 in FIG. 4d, and other related parts in the embodiments involved in FIGS. 2, 3a, 3b, 3c, 3d, 4a, 4b, 4c and 4d, which will not be repeated here.

In some embodiments, the above methods may include the methods described in the embodiments of the communication system side, terminal side, network device side, etc., which will not be repeated here.

An illustrative introduction to the technical solution of the present disclosure is described below.

### Network device side

In some embodiments, the network device may indicate the terminal whether to report auxiliary information; and the auxiliary information may be indicated in the channel state information (CSI) reporting configuration. For example, a 1-bit indication field is added to the CSI reporting configuration to indicate the auxiliary information. When the indication field is 1, no auxiliary information is reported. When the indication field is 0, the auxiliary information is reported.

In some embodiments, the auxiliary information is a beam squint level (BSL), and the auxiliary information is used to describe a magnitude of an array gain loss caused by beam squint. For example, a representation of the auxiliary information may be a normalized BSL value that falls within an interval [0, 1].

In some embodiments, the smaller the BSL, the larger the array gain loss caused by the beam squint; and the larger the BSL, the smaller the array gain loss caused by the beam squint.

In some embodiments, the network device indicates the terminal how to report the BSL and corresponding configuration information.

In some embodiments, the terminal has multiple reporting manners, which may be as follows.

Manner 1: the terminal reports one BSL value, where a calculation manner of the BSL value is indicated by the network device or determined by a protocol agreement.

Manner 2: the terminal reports multiple BSL values, where the network device may indicate a calculation manner of the multiple BSL values, or a calculation manner of the multiple BSL values may be determined by a protocol agreement.

Manner 3: based on a calculated BSL value and a determined BSL threshold, the terminal reports to the network device whether array gain loss compensation is required, where a calculation manner of the BSL value is indicated by the network device or determined by a protocol agreement, and the BSL threshold is indicated by the network device or determined by a protocol agreement.

In some embodiments, the network device determines an array gain compensation coefficient according to the auxiliary information reported by the terminal, and uses the array gain compensation coefficient to compensate the transmitted beam, for example, in following manners.

Manner 1: the transmitted beam is compensated by aligning the compensated beam with a beam direction of a center carrier frequency.

Manner 2: an actual location of the terminal is determined according to multiple BSL values, and the transmitted beam is compensated by aligning the compensated beam with the actual direction of the terminal.

### Terminal side

In some embodiments, the terminal receives reference signal indication information from the network device, completes reference signal measurement according to the reference signal indication information, and calculates a BSL value according to the above measurement result.

In some embodiments, the BSL value is calculated in following manners.

Manner 1: assuming that there are M reference signal resource units in a reference signal CSI-RS, and each reference signal resource unit corresponds to one EPRE, the BSL value may be calculated by the above formula 1.

Manner 2: the BSL value is directly represented by a ratio of EPREs of two reference signal resource units, and in this case, the closer the BSL value is to 1, the smaller the array gain loss caused by beam squint is, and vice versa.

In some embodiments, the terminal may also report auxiliary information to report to the network device a magnitude of an array gain loss caused by the beam squint.

The embodiments of the present disclosure also provide an apparatus for implementing any of the above methods. For example, an apparatus is provided, the apparatus includes a unit or module for implementing each step performed by the network device in any of the above methods. For another example, another apparatus is also provided, and the apparatus includes a unit or module for implementing each step performed by the terminal in any of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the above apparatuses. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor while the remaining part is implemented in the form of the hardware circuit.

In the embodiments of the present disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of a hardware circuit. The logical relationship of the hardware circuit is fixed or reconstructed, for example, the processor is a hardware circuit implemented by the ASIC or the PLD, such as the FPGA. In a reconstructible hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

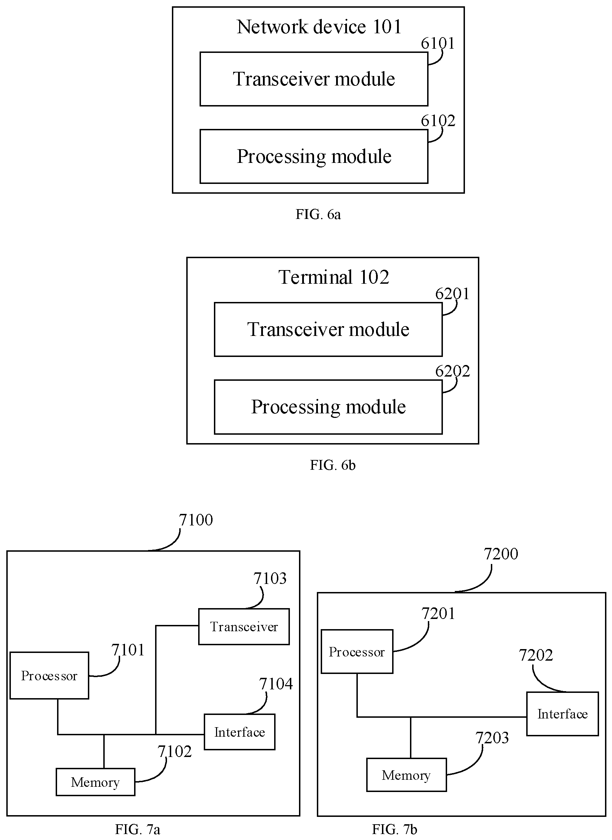

FIG. 6a is a block diagram of a network device 101 provided in an embodiment of the present disclosure. As shown in FIG. 6a, the network device 101 includes: a transceiver module 6101. In some embodiments, the transceiver module is configured to receive one or more instances of first information sent from a terminal, and the one or more instances of first information indicate an array gain loss of a first beam sent from the network device to the terminal. Optionally, the transceiver module is configured to perform at least one of the communication steps such as sending and/or receiving performed by the network device 101 in any of the above methods (for example, step 2101, step 2103, step 2104, step 2105, step 2106, step 2111, step 2114, but not limited thereto), which will not be repeated here. Optionally, in some embodiments, the network device 101 also includes a processing module 6102, and the processing module 6102 is configured to perform at least one of the other steps (for example, step 2115, step 2116, but not limited thereto) performed by the network device 101 in any of the above methods, which will not be repeated here.

FIG. 6b is a block diagram of a terminal 102 provided in an embodiment of the present disclosure. As shown in FIG. 6b, the terminal 102 includes: a transceiver module 6201. In some embodiments, the transceiver module is configured to send one or more instances of first information to a network device, and the one or more instances of first information indicate an array gain loss of a first beam sent from the network device to the terminal. Optionally, the transceiver module is configured to perform at least one of the communication steps such as sending and/or receiving performed by the network device 102 in any of the above methods (for example, step 2101, step 2103, step 2104, step 2105, step 2106, step 2111, step 2114, but not limited to this), which will not be repeated here. Optionally, in some embodiments, the terminal 102 also includes a processing module 6202, and the processing module 6202 is configured to perform at least one of the other steps (for example, step 2102, step 2107, step 2108, step 2109, step 2110, step 2112, step 2113, but not limited to this) performed by the network device 101 in any of the above methods, which will not be repeated here.

As shown in FIG. 7a, a communication device 7100 includes one or more processors 7101. The processor 7101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The processor 7101 is configured to call instructions so that the communication device 71**00** performs any of the above methods.

In some embodiments, the communication device 7100 further includes one or more memories 7102 for storing instructions. Optionally, all or part of the memories 7102 may also be located outside the communication device 7100.

In some embodiments, the communication device 7100 further includes one or more transceivers 7103. When the communication device 7100 includes one or more transceivers 7103, the communication steps such as sending and receiving in the above methods are performed by the transceiver 7103, and the other steps are performed by the processor 7101.

In some embodiments, the transceiver may include a receiver and a transmitter, and the receiver and the transmitter may be separate or integrated. Optionally, the terms such as transceiver, transceiver unit, transceiving machine, transceiver circuit, etc. may be replaced with each other, the terms such as transmitter, transmitting unit, transmitting machine, transmitting circuit, etc. may be replaced with each other, and the terms such as receiver, receiving unit, receiving machine, receiving circuit, etc. may be replaced with each other.

Optionally, the communication device 7100 further includes one or more interface circuits 7104, which are connected to the memory 7102. The interface circuit 7104 may be configured to receive signals from the memory 7102 or other devices, and may be configured to send signals to the memory 7102 or other devices. For example, the interface circuit 7104 may read instructions stored in the memory 7102 and send the instructions to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7a. The communication device may be an independent device or may be part of a large device. For example, the communication device may be: 1) an independent integrated circuit (IC), or a chip, or a chip system or subsystem; (2) a collection of one or more ICs, optionally, the above collection of ICs may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

Fig. 7b is a block diagram of a chip 7200 provided in an embodiment of the present disclosure. In a case where the communication device 7100 may be a chip or a chip system, reference may be made to the block diagram of the chip 7200 shown in FIG. 7b, but the present disclosure is not limited thereto.

The chip 7200 includes one or more processors 7201, and the processor 7201 is configured to call instructions so that the chip 7200 performs any of the above methods.

In some embodiments, the chip 7200 further includes one or more interface circuits 7202, which are connected to the memory 7203. The interface circuit 7202 may be configured to receive signals from the memory 7203 or other devices, and the interface circuit 7202 may be configured to send signals to the memory 7203 or other devices. For example, the interface circuit 7202 may read instructions stored in the memory 7203 and send the instructions to the processor 7201. Optionally, the terms such as interface circuit, interface, transceiver pin, and transceiver may be replaced with each other.

In some embodiments, the chip 7200 further includes one or more memories 7203 for storing instructions. Optionally, all or part of the memories 7203 may be located outside the chip 7200.

The present disclosure also provides a storage medium, on which instructions are stored, and when the instructions are executed on the communication device 7100, the communication device 7100 is caused to perform any of the above methods. Optionally, the storage medium is an electronic storage medium. Optionally, the storage medium is a computer-readable storage medium, but is not limited to this, and it may also be a storage medium readable by other devices. Optionally, the storage medium may be a non-transitory storage medium, but is not limited to this, and it may also be a temporary storage medium.

The present disclosure also provides a program product, which, when executed by the communication device 7100, causes the communication device 7100 to perform any of the above methods. Optionally, the program product is a computer program product.

The present disclosure also provides a computer program, which, when executed on a computer, causes the computer to perform any one of the above methods.

The above embodiments may be implemented in whole or in part by software, hardware, firmware or any combination thereof. When implemented by software, it may be implemented in whole or in part in the form of a computer program product. The computer program product includes one or more computer programs. When the computer program is loaded and executed on a computer, the procedures or functions according to the embodiments of the present disclosure are generated in whole or in part. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from a website site, computer, server or data center to another website site, computer, server or data center in a wired (e.g., coaxial cable, optical fiber, digital subscriber line (DSL)) or wireless (e.g., infrared, radio, microwave, etc.) manner. The computer-readable storage medium may be any available medium that a computer may access or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

Those ordinary skilled in the art may appreciate that the units and algorithm steps of various examples described in combination with embodiments disclosed herein may be implemented by the electronic hardware, or a combination of the computer software and the electronic hardware. Whether these functions are executed by the hardware or the software depends on the specific application and design constraints of the technical solution. For each particular application, those skilled in the art may use different methods to implement the described functions, but such an implementation should not be considered as extending beyond the scope of the present disclosure.

Those skilled in the art may clearly understand that for the convenience and brevity of the description, for the specific working process of the above-described system, apparatus and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A communication method, performed by a network device, and comprising:
receiving one or more instances of first information sent from a terminal, wherein the one or more instances of first information indicate an array gain loss of a first beam sent from the network device to the terminal.

2. The method according to claim 1, further comprising:
sending second information to the terminal, wherein the second information is configured to indicate the terminal whether to send the one or more instances of first information.

3. The method according to claim 1 or 2, further comprising:
receiving indication information sent from the terminal, wherein the indication information is configured to indicate the network device whether to compensate for the array gain loss.

4. The method according to claim 3, further comprising:
sending third information to the terminal, wherein the third information indicates a first threshold, and the first threshold is configured to assist the terminal in sending the indication information to the network device.

5. The method according to any one of claims 1 to 4, further comprising:
sending a first reference signal to the terminal, wherein the first reference signal is configured for the terminal to determine the one or more instances of first information.

6. The method according to claim 5, further comprising:
sending fourth information to the terminal, wherein the fourth information is configured to indicate the terminal to send one instance of first information or a plurality of instances of first information.

7. The method according to claim 6, wherein the fourth information comprises at least two reference signal resource unit indexes of the first reference signal.

8. The method according to any one of claims 1 to 7, further comprising:
sending fifth information to the terminal, wherein the fifth information indicates a method by which the terminal determines the one or more instances of first information.

9. The method according to any one of claims 1 to 8, further comprising:
determining a first coefficient based on the one or more instances of first information, wherein the first coefficient is configured to compensate for the array gain loss of the first beam.

10. The method according to claim 9, further comprising:
based on the first coefficient, compensating for the array gain loss of the first beam, and adjusting the first beam to a target beam direction.

11. The method according to claim 10, wherein the target beam direction comprises any one of:
a direction toward an actual location of the terminal; and
a direction of a center carrier frequency configured by the network device for the first beam.

12. A communication method, performed by a terminal, and comprising:
sending one or more instances of first information to a network device, wherein the one or more instances of first information indicate an array gain loss of a first beam sent from the network device to the terminal.

13. The method according to claim 12, further comprising:
receiving second information sent from the network device, wherein the second information is configured to indicate the terminal whether to send the one or more instances of first information.

14. The method according to claim 12 or 13, further comprising:
receiving third information sent from the network device, wherein the third information comprises a first threshold, the first threshold is configured to assist the terminal in sending indication information to the network device, and the indication information is configured to indicate the network device whether to compensate for the array gain loss.

15. The method according to any one of claims 12 to 14, further comprising:
receiving a first reference signal sent from the network device, wherein the first reference signal is configured for the terminal to determine the one or more instances of first information.

16. The method according to any one of claims 12 to 15, further comprising:
receiving fourth information sent from the network device, wherein the fourth information is configured to indicate the terminal to send one instance of first information or a plurality of instances of first information.

17. The method according to any one of claims 12 to 16, wherein the fourth information comprises at least two reference signal resource unit indexes of the first reference signal.

18. The method according to any one of claims 12 to 17, further comprising:
receiving fifth information sent from the network device, wherein the fifth information indicates a method by which the terminal determines the one or more instances of first information.

19. The method according to any one of claims 12 to 18, further comprising:
determining the one or more instances of first information.

20. The method according to claim 19, wherein determining the one or more instances of first information comprises:
determining energy per resource elements (EPREs) of two reference signal resource units of the first reference signal, wherein the two reference signal resource units of the first reference signal are indicated by a reference signal resource unit index or a protocol agreement; and
determining the one or more instances of first information based on a ratio between the EPREs of the two reference signal resource units of the first reference signal.

21. The method according to claim 20, further comprising:
determining the ratio between the EPREs of the two reference signal resource units based on the fifth information or a protocol agreement.

22. The method according to any one of claims 12 to 21, further comprising:
sending the indication information to the network device based on the first threshold and the ratio between the EPREs of the two reference signal resource units.

23. The method according to any one of claims 12 to 22, further comprising:
based on a protocol agreement, determining, by the terminal, whether to send the one or more instances of first information to the network device.

24. The method according to any one of claims 12 to 23, further comprising:
based on a protocol agreement, determining, by the terminal, a method for determining the one or more instances of first information.

25. The method according to any one of claims 15 to 24, further comprising:
determining, by the terminal, the first threshold based on a protocol agreement.

26. A network device, comprising a transceiver module configured to receive one or more instances of first information sent from a terminal, wherein the one or more instances of first information indicate an array gain loss of a first beam sent from the network device to the terminal.

27. A terminal, comprising a transceiver module configured to send one or more instances of first information to a network device, wherein the one or more instances of first information indicate an array gain loss of a first beam sent from the network device to the terminal.

28. A communication device, comprising:
one or more processors,
wherein the one or more processors are configured to call instructions to cause the communication device to perform the method according to any one of claims 1 to 25.

29. A communication system, comprising a first device and a second device, wherein the first device is configured to perform the method according to any one of claims 1 to 11, and the second device is configured to perform the method according to any one of claims 12 to 25.

30. A storage medium, storing instructions which, when executed on a communication device, cause the communication device to perform the method according to any one of claims 1 to 25.
